# EUROPEAN PATENT APPLICATION

(11) **EP 4 468 764 A1**
(43) Date of publication of application: **27.11.2024**
(21) Application number: 22921105.7
(22) Date of filing: 20.01.2022
(51) Int. Cl.: H04W 8/24

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: TIAN, Wenqiang, Dongguan, Guangdong 523860 (CN)
(74) Representative: RGTH
(86) International application number: PCT/CN2022/072962
(87) International publication number: WO 2023/137660

(57) **Abstract**

Embodiments of the present disclosure provide a wireless communication method, a terminal device and a network device. The wireless communication method includes: switching, by a terminal device, a network model for implementing a first function from a first model to a second model in a case where a computing resource of the terminal device is insufficient, where an input of the first model is a first information set, and an input of the second model is a second information set; or, switching, by a terminal device, an algorithm for implementing a first function from a first algorithm to a second algorithm in a case where a computing resource of the terminal device is insufficient, where an input of the first algorithm is a first information set, and an input of the second algorithm is a second information set; where complexity of the second model is lower than complexity of the first model, complexity of the second algorithm is lower than complexity of the first algorithm, an amount of information included in the second information set is greater than an amount of information included in the first information set, and the first function includes at least one of: downlink channel estimation, downlink beam management, downlink positioning, channel state information (CSI) feedback, and mobility management.

## Description

### TECHNICAL FIELD

Embodiments of the present disclosure relate to the field of communications, and more specifically, to a wireless communication method, a terminal device, and a network device.

### BACKGROUND

In a new radio (New Radio, NR) system, functions, such as channel estimation, channel state information (Channel State Information, CSI) feedback, beam management, positioning, mobility management, etc., may be implemented based on a network model or an algorithm, so as to obtain a performance gain. However, the network model or the algorithm is often highly dependent on a computing resource. With the shortage of computing resource, a fluctuation and a delay of a processing duration of the network model or the algorithm are caused, which may greatly affect the performance of the network model or the algorithm. Therefore, how to avoid a compromise in performance of the network model or the algorithm in a case where a computing resource is insufficient is an urgent problem to be solved.

### SUMMARY

The embodiments of the present disclosure provide a wireless communication method, a terminal device and a network device. In a case where a computing resource is insufficient, a network model or an algorithm may be switched, and complexity of a switched model or algorithm is reduced, and an amount of information input into the switched model or algorithm is increased. Thus, a compromise in performance of the network model or the algorithm can be avoided in a case where a computing resource is insufficient.

In a first aspect, there is provided a wireless communication method, including:
switching, by a terminal device, a network model for implementing a first function from a first model to a second model in a case where a computing resource of the terminal device is insufficient, where an input of the first model is a first information set, and an input of the second model is a second information set; or,
switching, by a terminal device, an algorithm for implementing a first function from a first algorithm to a second algorithm in a case where a computing resource of the terminal device is insufficient, where an input of the first algorithm is a first information set, and an input of the second algorithm is a second information set;
where complexity of the second model is lower than complexity of the first model, complexity of the second algorithm is lower than complexity of the first algorithm, an amount of information included in the second information set is greater than an amount of information included in the first information set, and the first function includes at least one of: downlink channel estimation, downlink beam management, downlink positioning, CSI feedback, and mobility management.

In a second aspect, there is provided a wireless communication method, including:
sending, by a network device, first indication information to a terminal device;
where the first indication information is used to indicate the terminal device to switch a network model for implementing a first function from a first model to a second model in a case where a computing resource is insufficient, an input of the first model is a first information set, and an input of the second model is a second information set; or, the first indication information is used to indicate the terminal device to switch an algorithm for implementing a first function from a first algorithm to a second algorithm in a case where a computing resource is insufficient, an input of the first algorithm is a first information set, and an input of the second algorithm is a second information set;
where complexity of the second model is lower than complexity of the first model, complexity of the second algorithm is lower than complexity of the first algorithm, an amount of information included in the second information set is greater than an amount of information included in the first information set, and the first function includes at least one of: downlink channel estimation, downlink beam management, downlink positioning, CSI feedback, and mobility management.

In a third aspect, there is provided a wireless communication method, including:
switching, by a network device, a network model for implementing a second function from a third model to a fourth model in a case where a computing resource of the network device is insufficient, where an input of the third model is a third information set, and an input of the fourth model is a fourth information set; or,
switching, by a network device, an algorithm for implementing a second function from a third algorithm to a fourth algorithm in a case where a computing resource of the network device is insufficient, where an input of the third algorithm is a third information set, and an input of the fourth algorithm is a fourth information set;
where complexity of the fourth model is lower than complexity of the third model, complexity of the fourth algorithm is lower than complexity of the third algorithm, an amount of information included in the fourth information set is greater than an amount of information included in the third information set, and the second function includes at least one of: uplink channel estimation, uplink beam management, uplink positioning, CSI feedback, and mobility management.

In a fourth aspect, there is provided a wireless communication method, including:
receiving, by a terminal device, second indication information sent by a network device;
where the second indication information is used to indicate that the network device switches a network model for implementing a second function from a third model to a fourth model in a case where a computing resource is insufficient, an input of the third model is a third information set, and an input of the fourth model is a fourth information set; or, the second indication information is used to indicate that the network device switches an algorithm for implementing a second function from a third algorithm to a fourth algorithm in a case where a computing resource is insufficient, an input of the third algorithm is a third information set, and an input of the fourth algorithm is a fourth information set;
where complexity of the fourth model is lower than complexity of the third model, complexity of the fourth algorithm is lower than complexity of the third algorithm, an amount of information included in the fourth information set is greater than an amount of information included in the third information set, and the second function includes at least one of: uplink channel estimation, uplink beam management, uplink positioning, CSI feedback, and mobility management.

In a fifth aspect, there is provided a terminal device for performing the method in the above first aspect.

Specifically, the terminal device includes a functional module for performing the method in the above first aspect.

In a sixth aspect, there is provided a network device for performing the method in the above second aspect.

Specifically, the network device includes a functional module for performing the method in the above second aspect.

In a seventh aspect, there is provided a network device for performing the method in the above third aspect.

Specifically, the terminal device includes a functional module for performing the method in the above third aspect.

In an eighth aspect, there is provided a terminal device for performing the method in the above fourth aspect.

Specifically, the terminal device includes a functional module for performing the method in the above fourth aspect.

In a ninth aspect, there is provided a terminal device, including: a processor and a memory. The memory is used to store a computer program; and the processor is used to call the computer program stored in the memory and run the computer program, so as to enable the terminal device to perform the method in the above first aspect.

In a tenth aspect, there is provided a network device, including: a processor and a memory. The memory is used to store a computer program; and the processor is used to call the computer program stored in the memory and run the computer program, so as to enable the network device to perform the method in the above second aspect.

In an eleventh aspect, there is provided a network device, including: a processor and a memory. The memory is used to store a computer program; and the processor is used to call the computer program stored in the memory and run the computer program, so as to enable the network device to perform the method in the above third aspect.

In a twelfth aspect, there is provided a terminal device, including: a processor and a memory. The memory is used to store a computer program; and the processor is used to call the computer program stored in the memory and run the computer program, so as to enable the terminal device to perform the method in the above fourth aspect.

In a thirteenth aspect, there is provided an apparatus for implementing the method in any one of the above first aspect to the fourth aspect.

Specifically, the apparatus includes: a processor, configured to call a computer program from a memory and run the computer program, so as to enable a device equipped with the apparatus to perform the method in any one of the above first aspect to the fourth aspect.

In a fourteenth aspect, there is provided a computer readable storage medium, configured to store a computer program. The computer program enables a computer to perform the method in any one of the above first aspect to the fourth aspect.

In a fifteenth aspect, there is provided a computer program product, including computer program instructions. The computer program instructions enable a computer to perform the method in any one of the above first aspect to the fourth aspect.

In a sixteenth aspect, there is provided a computer program, where the computer program, upon being executed on a computer, enables a computer to perform the method in any one of the above first aspect to the fourth aspect.

Through the technical solutions of the above first aspect and second aspect, in a case where a computing resource of a terminal device is insufficient, the terminal device switches a network model for implementing a first function from a first model to a second model, complexity of the second model is lower than complexity of the first model, and an amount of information input into the second model is greater than an amount of information input into the first model, thereby avoiding a compromise in performance of the network model in a case where a computing resource is insufficient. Or, in a case where a computing resource of a terminal device is insufficient, the terminal device switches an algorithm for implementing a first function from a first algorithm to a second algorithm, complexity of the second algorithm is lower than complexity of the first algorithm, and an amount of information input into the second algorithm is greater than an amount of information input into the first algorithm, thereby avoiding a compromise in performance of the algorithm in a case where a computing resource is insufficient.

Through the technical solutions of the above third aspect and fourth aspect, in a case where a computing resource of a network device is insufficient, the network device switches a network model for implementing a second function from a third model to a fourth model, complexity of the fourth model is lower than complexity of the third model, and an amount of information input into the fourth model is greater than an amount of information input into the third mode, thereby avoiding a compromise in performance of the network model in a case where a computing resource is insufficient. Or, in a case where a computing resource of a network device is insufficient, the network device switches an algorithm for implementing a second function from a third algorithm to a fourth algorithm, complexity of the fourth algorithm is lower than complexity of the third algorithm, and an amount of information input into the fourth algorithm is greater than an amount of information input into the third algorithm, thereby avoiding a compromise in performance of the algorithm in a case where a computing resource is insufficient.

### BRIEF DESCRIPTION OF THE DRAWINGS

FIG. 1 is a schematic diagram of an architecture of a communication system applied in the embodiments of the present disclosure.
FIG. 2 is a schematic diagram of AI-based wireless communication provided by the present disclosure.
FIG. 3 is a schematic flow chart of a wireless communication method provided according to the embodiments of the present disclosure.
FIG. 4 is a schematic diagram of the third information and the fourth information provided according to the embodiments of the present disclosure.
FIG. 5 is a schematic diagram of the configuration and updating of a downlink reference signal provided according to the embodiments of the present disclosure.
FIG. 6 is a schematic flow chart of another wireless communication method provided according to the embodiments of the present disclosure.
FIG. 7 is a schematic flow chart of yet another wireless communication method provided according to the embodiments of the present disclosure.
FIG. 8 is a schematic diagram of the configuration and updating of an uplink reference signal provided according to the embodiments of the present disclosure.
FIG. 9 is a schematic diagram of the updating of a CSI feedback scheme provided according to the embodiments of the present disclosure.
FIG. 10 is a schematic diagram of the configuration and updating of another downlink reference signal provided according to the embodiments of the present disclosure.
FIG. 11 is a schematic flow chart of yet another wireless communication method provided according to the embodiments of the present disclosure.
FIG. 12 is a schematic block diagram of a terminal device provided according to the embodiments of the present disclosure.
FIG. 13 is a schematic block diagram of a network device provided according to the embodiments of the present disclosure.
FIG. 14 is a schematic block diagram of another network device provided according to the embodiments of the present disclosure.
FIG. 15 is a schematic block diagram of another terminal device provided according to the embodiments of the present disclosure.
FIG. 16 is a schematic block diagram of a communication device provided according to the embodiments of the present disclosure.
FIG. 17 is a schematic block diagram of an apparatus provided according to the embodiments of the present disclosure.
FIG. 18 is a schematic block diagram of a communication system provided according to the embodiments of the present disclosure.

### DETAILED DESCRIPTION

Technical solutions in the embodiments of the present disclosure will be described below with reference to the accompanying drawings in the embodiments of the present disclosure. Obviously, the described embodiments are merely some but not all of the embodiments of the present disclosure. For the embodiments of the present disclosure, all other embodiments obtained by the ordinary skilled in the art without paying creative effort belong to the protection scope of the present disclosure.

Technical solutions according to embodiments of the present disclosure may be applied to various communication systems, such as a global system of mobile communication (Global System of Mobile communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an advanced long term evolution (Advanced long term evolution, LTE-A) system, a new radio (New Radio, NR) system, an evolution system of the NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial networks (Non-Terrestrial Networks, NTN) system, a universal mobile telecommunications system (Universal Mobile Telecommunication System, UMTS), a wireless local area network (Wireless Local Area Networks, WLAN), internet of things (internet of things, IoT), a wireless fidelity (Wireless Fidelity, WiFi), a 5th-Generation (5th-Generation, 5G) communication system, or other communication systems, etc.

Generally, traditional communication systems support a limited quantity of connections, and are easy to implement. However, with the development of communication technology, mobile communication systems will not only support traditional communication, but also support, for example, device to device (Device to Device, D2D) communication, machine to machine (Machine to Machine, M2M) communication, machine type communication (Machine Type Communication, MTC), vehicle to vehicle (Vehicle to Vehicle, V2V) communication, and vehicle to everything (Vehicle to everything, V2X) communication, and the embodiments of the present disclosure may be applied to these communication systems as well.

In some embodiments, the communication systems in the embodiments of the present disclosure may be applied to a carrier aggregation (Carrier Aggregation, CA) scenario, a dual connectivity (Dual Connectivity, DC) scenario, a standalone (Standalone, SA) networking scenario, or a non-standalone (Non-Standalone, SA) networking scenario.

In some embodiments, the communication system in the embodiments of the present disclosure can be applied to an unlicensed spectrum, where the unlicensed spectrum can also be considered as a shared spectrum; or, the communication system in the embodiments of the present disclosure can also be applied to an authorized spectrum, where the authorized spectrum can also be considered as an unshared spectrum.

In some embodiments, the communication system in the embodiments of the present disclosure may be applied in FR1 frequency band (corresponding to a frequency range of 410 MHz to 7.125 GHz), may also applied in FR2 frequency band (corresponding to a frequency range of 24.25 GHz to 52.6 GHz), or may further be applied in a new frequency band, such as a high-frequency band corresponding to a frequency range of 52.6 GHz to 71 GHz or a frequency range of 71 GHz to 114.25 GHz.

The embodiments of the present disclosure are described in combination with a network device and a terminal device. The terminal device may also be referred to as a user equipment (User Equipment, UE), an access terminal, a subscriber unit, a subscriber station, a mobile station, a mobile platform, a remote station, a remote terminal, a mobile device, a user terminal, a terminal, a wireless communication device, a user agent or a user apparatus.

The terminal device may be a station (STATION, ST) in the WLAN, or may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device with a wireless communication function, a computing device or another processing device connected to a wireless modem, a vehicle-mounted device, a wearable device, a terminal device in a next generation communication system (e.g., an NR network), or a terminal device in a future evolved public land mobile network (Public Land Mobile Network, PLMN) network, etc.

In the embodiments of the present disclosure, the terminal device may be deployed on land including indoor or outdoor, handheld, wearable or vehicle-mounted; alternatively, the terminal device may be deployed on water (such as on ships); alternatively, the terminal device may be deployed aerially (such as in airplanes, balloons and satellites).

In the embodiments of the present disclosure, the terminal device may be a mobile phone (Mobile Phone), a pad (Pad), a computer with a wireless transceiving function, a virtual reality (Virtual Reality, VR) terminal device, an augmented reality (Augmented Reality, AR) terminal device, a wireless terminal device in industrial control, a wireless terminal device in self driving (self driving), a wireless terminal device in remote medical (remote medical), a wireless terminal device in smart grid (smart grid), a wireless terminal device in transportation safety (transportation safety), a wireless terminal device in smart city (smart city), a wireless terminal device in smart home (smart home), a vehicle-mounted communication device, a wireless communication chip/application specific integrated circuit (application specific integrated circuit, ASIC)/ System on Chip (SoC) or the like.

As an example rather than a limitation, the terminal device in the embodiments of the present disclosure may be a wearable device. The wearable device may also be referred to as a wearable smart device, which is a general term of wearable devices developed by intelligent design and development on daily wear by applying wearable technology, such as glasses, gloves, watches, clothing and shoes. The wearable device is a portable device that is worn directly on a body, or integrated into clothes or accessories of users. The wearable device not only is a hardware device, but also implements powerful functions through software support as well as data interaction or cloud interaction. Generalized wearable smart devices include devices that are fully functional, have large sizes, and may implement complete or partial functions without relying on smart phones, such as smart watches or smart glasses, and devices (such as various smart bracelets, and smart pieces of jewelry for monitoring physical signs) which focus on a certain kind of application functions only and need to be used in conjunction with other devices (such as smart phones).

In the embodiments of the present disclosure, the network device may be a device for communicating with a mobile device, and the network device may be an access point (Access Point, AP) in a WLAN and a base station (Base Transceiver Station, BTS) in GSM or CDMA; may also be a base station (NodeB, NB) in a WCDMA; and may further be an evolutional Node B (Evolutional Node B, eNB or eNodeB) in LTE, or a relay station or an access point, or a vehicle-mounted device, a wearable device, a network device or a base station (gNB) in an NR network, or a network device in a future evolved PLMN network or a network device in an NTN network, etc.

As an example rather than a limitation, in the embodiments of the present disclosure, the network device may have a mobility characteristic, for example, the network device may be a mobile device. In some embodiments, the network device may be a satellite or a balloon station. For example, the satellite may be a low earth orbit (low earth orbit, LEO) satellite, a medium earth orbit (medium earth orbit, MEO) satellite, a geostationary earth orbit (geostationary earth orbit, GEO) satellite, or a high elliptical orbit (High Elliptical Orbit, HEO) satellite, etc. In some embodiments, the network device may be a base station disposed in a position on land, in a water region and the like.

In the embodiments of the present disclosure, the network device may provide a service for a cell, and the terminal device communicates with the network device through a transmission resource (e.g., a frequency-domain resource, which is also referred to as a spectrum resource) used by the cell. The cell may be a cell corresponding to the network device (e.g., a base station), and the cell may belong to a macro base station, or may belong to a base station corresponding to a small cell (Small cell). The small cells herein may include a metro cell (Metro cell), a micro cell (Micro cell), a pico cell (Pico cell), a femto cell (Femto cell), and the like. These small cells are characterized by a small coverage range and a low transmission power, and are suitable for providing high-speed data transmission services.

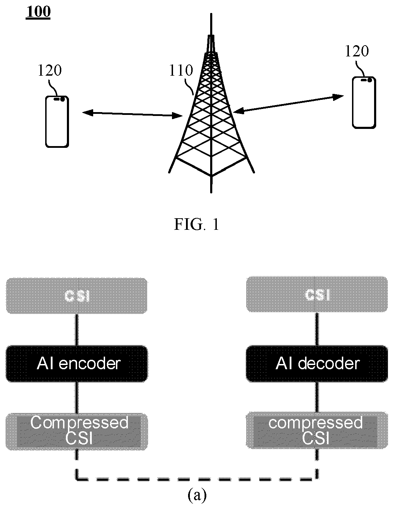

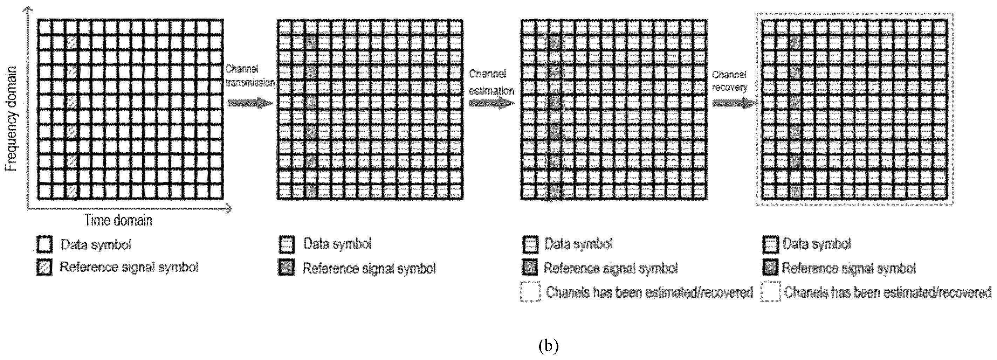

For example, a communication system 100 applied in the embodiments of the present disclosure is shown in FIG. 1. The communication system 100 may include a network device 110, and the network device 110 may be a device that communicates with a terminal device 120 (also referred to as a communication terminal or a terminal). The network device 110 may provide communication coverage for a specific geographical area and may communicate with terminal devices located within the coverage area.

FIG. 1 exemplarily shows one network device and two terminal devices, and in some embodiments, the communication system 100 may include a plurality of network devices and a coverage range of each network device may include another number of terminal devices, the embodiments of the present disclosure are not limited thereto.

In some embodiments, the communication system 100 may also include other network entities such as a network controller and a mobility management entity, etc., which are not limited in the embodiments of the present disclosure.

It should be understood that devices with communication functions in the network/system in the embodiments of the present disclosure can be called communication devices. Taking the communication system 100 shown in FIG. 1 as an example, the communication device may include a network device 110 and the terminal devices 120 with communication functions. The network device 110 and the terminal devices 120 may be the specific devices described above and will not be repeated herein. The communication device may further include other devices in the communication system 100, for example, other network entities (e.g., a network controller, a mobile management entity, etc.), which is not limited in the embodiments of the present disclosure.

It should be understood that the terms "system" and "network" are often used interchangeably herein. The term "and/or" herein is only an association relationship to describe associated objects, which indicates that there may be three kinds of relationships, for example, A and/or B may indicate three cases where: A exists alone, both A and B exist, and B exists alone. In addition, a character "/" herein generally indicates that related objects before and after *"*/*"* are in an "or" relationship.

It should be understood that a first communication device and a second communication device are involved herein. The first communication device may be a terminal device, such as a mobile phone, a machine facility, a customer premise equipment (Customer Premise Equipment, CPE), an industrial equipment, or a vehicle, etc. The second communication device may be a peer communication device of the first communication device, such as a network device, a mobile phone, an industrial equipment, a vehicle, etc. Herein, the first communication device as a terminal device and the second communication device as a network device are taken as specific examples for description.

The terms used in the implementations of the present disclosure are only for the purpose of explanation of specific embodiments of the present disclosure, and are not intended to limit the present disclosure. The terms "first," "second," "third," and "fourth", etc., in the specification, claims, and drawings of the present disclosure are used to distinguish different objects, rather than to describe a specific order. In addition, the terms "include" and "have" and any variations thereof are intended to cover non-exclusive inclusion.

It should be understood that "indication" involved in embodiments of the present disclosure may be a direct indication, may be an indirect indication, or may represent an association relationship. For example, A indicating B may mean that A indicates B directly, for example, B can be acquired through A; or A indicating B may mean that A indicates B indirectly, for example, A indicates C, and B can be acquired through C; or A indicating B may mean that there is an association between A and B.

In the description of the embodiments of the present disclosure, the term "correspond" may mean that there is a directly corresponding relationship or an indirectly corresponding relationship between two parties, or mean that there is an association between two parties, or mean a relationship such as indicating and being indicated, or configuring and being configured.

In the embodiments of the present disclosure, the term "predefined" or "preconfigured" may be achieved by pre-storing corresponding codes, tables or other approaches that can be used to indicate relevant information in the devices (for example, including the terminal device and the network device), and the specific implementation is not limited in the present disclosure. For example "predefined" may refer to what is defined in the protocol.

In the embodiments of the present disclosure, the "protocol" may refer to a standard protocol in the field of communication, which may include, for example, an LTE protocol, an NR protocol, and related protocols applied in a future communication system, which will not be limited thereto in the present disclosure.

In order to facilitate understanding of the technical solutions of the embodiments of the present disclosure, the technical solutions of the present disclosure are described in detail below through specific embodiments. The following related technologies as optional solutions may be arbitrarily combined with the technical solutions of the embodiments of the present disclosure, which all belong to the protection scope of the embodiments of the present disclosure. The embodiments of the present disclosure include at least part of the following contents.

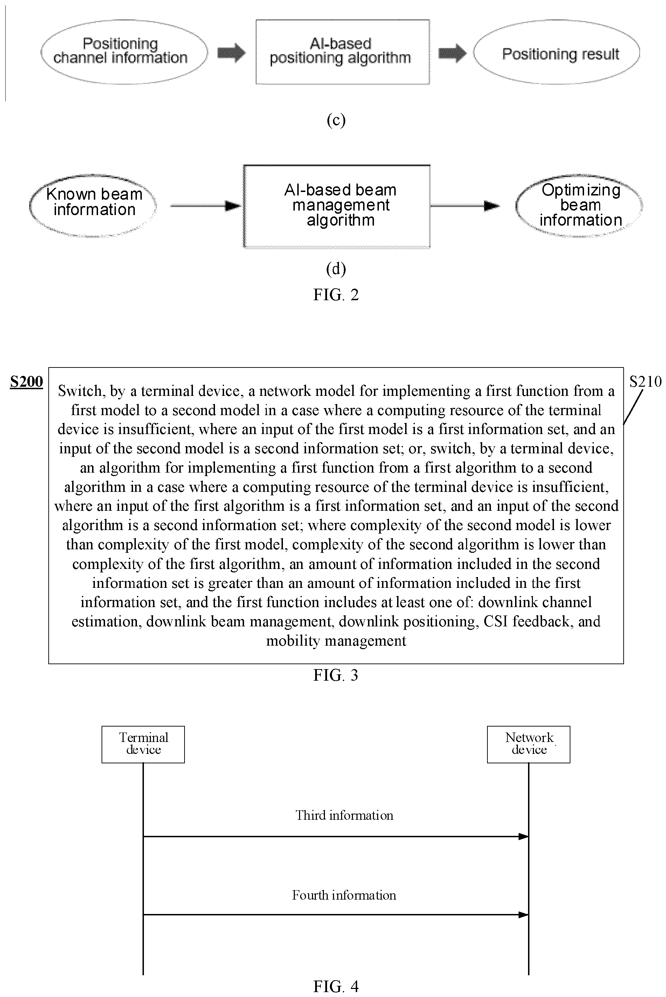

Solutions based on artificial intelligence (Artificial Intelligence, AI) are more and more applied in wireless communication systems. For example, the artificial intelligence is relied on to achieve: a CSI feedback problem as shown in (a) in FIG. 2, where AI-based CSI compression and feedback is achieved by introducing an AI encoder and an AI decoder; a channel estimation problem as shown in (b) in FIG. 2, where a high-performance estimation of a given channel is achieved by an AI channel estimator; a positioning problem as shown in (c) in FIG. 2, where a high-precision positioning result is acquired by an AI-based positioning algorithm relying on positioning channel information; and a beam management problem as shown in (d) in FIG. 2, where preferred or finer beam information is acquired, or a prediction of beam information at a future moment is acquired by an AI-based beam management algorithm based on known beam information.

As for AI-based wireless communication solutions, current research has gradually presented some performance gains and effective effects. However, it should be pointed out that herein, for these works, a dependence degree of these solutions on a resource and possible problems occurring in these solutions need to be considered when these solutions are actually applied.

As for the AI-based wireless communication solutions (the scope discussed in the present disclosure is not limited to the AI-based wireless communication solutions, and may also be general wireless communication solutions; these solutions have a dependence degree on a resource (e.g., a computing resource) substantially; however, since the AI-based wireless communication solutions often have a higher dependence degree on the above resource, the AI-based wireless communication solutions are taken as examples to illustrate the problem in the description of the present disclosure; and the methods described in the present disclosure may be considered to be also applicable to the general wireless communication solutions), a main executor of the solutions need to have a certain computing resource to quickly complete a complex calculation, that is, a corresponding problem of wireless communication can only be solved under the condition of the above resource. It should be noted herein that for the same problem, the same algorithm, and the same model solution, although different conditions of resources above may produce an equivalent calculation result, required calculation time will vary greatly. For example, taking an AI-based channel estimation as an example, when a solution of channel estimation is fixed and an available computing resource is sufficient, calculation time to complete channel estimation will be shorter; however, when a computing resource is insufficient, calculation time to complete channel estimation will be longer. Similar problem also occurs in, such as AI-based CSI feedback, AI-based beam management, AI-based positioning, and AI-based mobility management, etc. A large number of solutions for the wireless communication system need to be completed within a specific time, that is, timeliness of the above AI-based solutions is also very important. Therefore, if a fluctuation and a delay of a duration for processing a problem is caused by an insufficient resource, such as an insufficient computing resource, etc., a problem on effectiveness of an entire system design will be resulted. For example, if the AI-based channel estimation needs a long time to complete channel estimation once due to insufficient computing power, the actual channel quality has already been changed when the channel quality is estimated, and thus, the estimation has become invalid. The same problem occurs in the CSI feedback. If the timeliness cannot be guaranteed, the CSI feedback will be meaningless. As for the positioning problem, if it is for real-time positioning, the above problem also occurs. The similar problem occurs in beam management, mobility management, etc.

As for the wireless communication system, if a resource, such as a computing resource, etc., is insufficient for the problems (such as AI-based CSI feedback, an AI-based channel estimation, AI-based positioning, AI-based beam management, AI-based mobility management, etc.), thus durations required for the AI solutions to the above problems exceed latency requirements of respective tasks themselves, a relative direct solution is to replace a current model with a simpler and less complex model, which can reduce the durations required for the above solutions and thus, satisfy the latency requirements of the respective tasks themselves.

However, if a solution adopting a simple model is directly accepted, complexity of a corresponding model and algorithm is often related to an accuracy of solving a corresponding problem. For example, when AI-based channel estimation is performed, a decrease in accuracy of corresponding channel estimation will often be caused when the AI-based channel estimation model is replaced with a simpler and faster-computing new model. In this case, after the time-consuming problem of the AI-based solution is solved, a new problem of a compromise in accuracy will occur.

Based on the above analysis, it can be found that for the AI-based solution, taking the AI-based wireless communication solution as an example, relationships between a computing resource, computing time, and computing accuracy are mutually influenced. Without considering influences of other factors, if there is a problem of an insufficient computing resource, the effect of completion of a quick calculation and acquisition of a high-precision result may not be acquired at the same time.

However, as for the wireless communication system, it has been found and proposed in this solution that the contradiction among the above computing resource, computing time, and computing accuracy may be handled by adapting and adjusting the relationship between the computing resource and the available information resource. For example, when the computing resource is valid, the method of reducing a model complexity but increasing valid input information acquirable by the model may be used to avoid a great compromise in accuracy of the solution.

In summary, how to deal with the problem and conflict among different computing resources, running time of models and algorithms, and timeliness of tasks is a problem that needs to be solved. This solution proposes a method for updating information configuration based on a real-time resource power of different terminal devices and/or network devices, in terms of mutual relationships and adaptation among a computing resource, computing time, computing accuracy, and the available information.

The technical solutions of the present disclosure are described in detail below through specific embodiments.

FIG. 3 is a schematic flow chart of a wireless communication method 200 according to the embodiments of the present disclosure. As shown in FIG. 3, the wireless communication method 200 may include at least part of the following contents.

In S210, in a case where a computing resource of a terminal device is insufficient, the terminal device switches a network model for implementing a first function from a first model to a second model, an input of the first model is a first information set, and an input of the second model is a second information set; or, in a case where a computing resource of a terminal device is insufficient, the terminal device switches an algorithm for implementing a first function from a first algorithm to a second algorithm, an input of the first algorithm is a first information set, and an input of the second algorithm is a second information set, where complexity of the second model is lower than complexity of the first model, complexity of the second algorithm is lower than complexity of the first algorithm, an amount of information included in the second information set is greater than an amount of information included in the first information set, and the first function includes at least one of: downlink channel estimation, downlink beam management, downlink positioning, CSI feedback, and mobility management.

It should be noted that, as for a wireless communication system, an understanding may be to provide more information in the solution, which will result in greater computing complexity, but can acquire a higher accuracy of a model. However, the above conception does not fully consider a problem of long calculation time due to the complexity of calculation. In addition, such increasing in accuracy brought by increasing provided information is difficult to be acquired in actual wireless communication. In the embodiments of the present disclosure, when it is considered that a simple model needs to be used due to a limitation on the computing resource, so as to complete the calculation of the model in the same time, if the simple model will cause a compromise in performance, more information needs to be provided to the simple model to compensate for the compromise in performance. What to be sought herein in terms of performance is no loss, rather than pursuing higher performance under a more complex model. In a specific design, the present disclosure proposes a solution for updating information configuration based on different terminal devices, in terms of mutual relationships and adaptation among a computing resource, computing time, computing accuracy, and available information.

In the present disclosure, the main consideration is that when a resource required to be used for machine learning and a neural network is limited, for example, a computing resource (e.g., a fixed computing resource or a real-time computing resource) is limited, more available information may be adopted as an input to a network model or an algorithm, thereby compensating for a compromise in performance of the network model or the algorithm due to a limitation on the computing resource.

In the embodiments of the present disclosure, the first model and the second model may be AI models or non-AI models, which are not limited in the present disclosures.

In the embodiments of the present disclosure, in a case where a computing resource of a terminal device is insufficient, the terminal device switches a network model for implementing a first function from a first model to a second model, complexity of the second model is lower than complexity of the first model, and an amount of information input into the second model is greater than an amount of information input into the first model, thereby capable of avoiding the compromise in performance of the network model in a case where the computing resource is insufficient. Or, in a case where a computing resource of the terminal device is insufficient, the terminal device switches an algorithm for implementing a first function from a first algorithm to a second algorithm, complexity of the second algorithm is lower than complexity of the first algorithm, and an amount of information input into the second algorithm is greater than an amount of information input into the first algorithm, thereby capable of avoiding the compromise in performance of the algorithm in the case where the computing resource is insufficient. That is, the present disclosure seeks no loss in terms of performance rather than pursuing higher performance under a more complex model.

Specifically, for example, the first function is downlink channel estimation, and then, the first information set includes information for implementing the downlink channel estimation, and the second information set includes information for implementing the downlink channel estimation. In this case, the information for implementing the downlink channel estimation may be downlink channel information. Specifically, more downlink reference signal resources are configured, for example, in time domain and frequency domain, denser downlink reference signals are configured, or a larger configuration bandwidth is adopted, etc., thereby beneficial for more accurately acquiring downlink channel information, that is, acquiring the information included in the second information set for implementing the downlink channel estimation.

Specifically, for example, the first function is downlink beam management, and then, the first information set includes information for implementing the downlink beam management, and the second information set includes information for implementing the downlink beam management. In this case, the information for implementing the downlink beam management may be downlink beam information. Specifically, more downlink reference signal resources are configured, for example, in time domain and frequency domain, denser downlink reference signals are configured, or a larger configuration bandwidth is adopted, etc., thereby beneficial for more accurately acquiring the downlink beam information, that is, acquiring the information included in the second information set for implementing the downlink beam management.

Specifically, for example, the first function is downlink positioning, and then, the first information set includes information for implementing the downlink positioning, and the second information set includes information for implementing the downlink positioning. In this case, the information for implementing the downlink positioning may be downlink position information. Specifically, more downlink reference signal resources are configured, for example, in time domain and frequency domain, denser downlink reference signals are configured, or a larger configuration bandwidth is adopted, etc., thereby beneficial for more accurately acquiring the downlink position information, that is, acquiring the information included in the second information set for implementing the downlink positioning.

Specifically, for example, the first function is CSI feedback, and then, the first information set includes information for implementing the CSI feedback, and the second information set includes information for implementing the CSI feedback. In this case, the information for implementing the CSI feedback may be CSI information. Specifically, more CSI feedback bits (i.e., the second information set includes CSI information carried by more CSI feedback bits) are configured, and more feedback bits will allow fed-back CSI information to carry more precise CSI information, thereby beneficial for acquiring better CSI recovery effect on a network side.

Specifically, for example, the first function is mobility management, and then, the first information set includes information for implementing the mobility management, and the second information set includes information for implementing the mobility management. In this case, the information for implementing the mobility management may be mobility information. Specifically, more reference signal resources are configured, for example, in time domain and frequency domain, denser reference signals are configured, or a larger configuration bandwidth is adopted, etc., thereby beneficial for more accurately acquiring the mobility information, that is, acquiring the information included in the second information set for implementing the mobility management.

In some embodiments, the terminal device receives first information and second information respectively. The first information is determined based on an available computing resource of the terminal device within a first duration, and the first information is used to configure first downlink reference signal resource information. The second information is determined based on an available computing resource of the terminal device within a second duration, and the second information is used to configure second downlink reference signal resource information. The available computing resource within the first duration is more than the available computing resource within the second duration. Further, the terminal device acquires the first information set according to the first downlink reference signal resource information, and the terminal device acquires the second information set according to the second downlink reference signal resource information.

Specifically, for example, the terminal device receives the first information and the second information respectively sent by the network device. Of course, the terminal device may also receive the first information and the second information respectively from other terminal devices. The present disclosure does not limit thereto.

It should be noted that this embodiment does not limit a length of the first duration. For example, when the length of the first duration is short, the first duration may be regarded as a moment. Similarly, this embodiment does not limit a length of the second duration. For example, when the length of the second duration is short, the second duration may be regarded as a moment.

In some embodiments, the first information is further used to configure a first model, and/or the second information is further used to configure a second model. That is, the first information may be used to configure the first downlink reference signal resource information and the first model at the same time, and the second information may be used to configure the second downlink reference signal resource information and the second model at the same time. In this case, in the above S210, the terminal device switches the network model for implementing the first function from the first model to the second model.

In some embodiments, the first information is further used to configure a first algorithm, and/or, the second information is further used to configure the second algorithm. That is, the first information may be used to configure the first downlink reference signal resource information and the first algorithm at the same time, and the second information may be used to configure the second downlink reference signal resource information and the second algorithm at the same time. In this case, in the above S210, the terminal device switches the algorithm for implementing the first function from the first algorithm to the second algorithm.

In some embodiments, the terminal device determines the first model according to the available computing resource of the terminal device within the first duration, and/or the terminal device determines the second model according to the available computing resource of the terminal device within the second duration. That is, the terminal device may determine the network model for implementing the first function based on its own available computing resource. In this case, the terminal device is configured with, for example, a correspondence between the available computing resource and the network model for implementing the first function.

In some embodiments, the terminal device determines the first algorithm according to the available computing resource of the terminal device within the first duration, and/or the terminal device determines the second algorithm according to the available computing resource of the terminal device within the second duration. That is, the terminal device may determine the algorithm for implementing the first function based on its own available computing resource. In this case, the terminal device is configured with, for example, a correspondence between the available computing resource and the algorithm for implementing the first function.

In some embodiments, the available computing resource of the terminal device is determined by at least one of: computing power of the terminal device, and a computing power level of the terminal device. Optionally, the computing power of the terminal device includes fixed computing power and real-time computing power.

It should be noted that the evaluation of the computing power can be based on a number of calculations that can be performed per unit time as an indicator.

Specifically, the computing power may be divided based on a grade into N categories, for example, three categories: high performance, medium performance, and low performance.

In some embodiments, a correspondence between the available computing resource of the terminal device and the computing power of the terminal device is determined by at least one of: protocol agreement, pre-definition, pre-configuration of an operator, configuration of a network device, and configuration of the terminal device.

Specifically, for example, the network device may configure the correspondence between the available computing resource of the terminal device and the computing power of the terminal device by one or more of: broadcasting, downlink control information (Downlink Control Information, DCI), a media access control control element (Media Access Control Control Element, MAC CE), radio resource control (Radio Resource Control, RRC) signaling, a downlink data channel, a downlink control channel, transmission of a specific downlink artificial intelligence-type data transmission channel, a specific downlink multicast channel, and an uplink broadcast channel.

In some embodiments, a correspondence between the available computing resource of the terminal device and the computing power level of the terminal device is determined by at least one of: protocol agreement, pre-definition, pre-configuration of an operator, configuration of a network device, and configuration of the terminal device.

Specifically, for example, the network device may configure the correspondence between the available computing resource of the terminal device and the computing power level of the terminal device by one or more of: broadcasting, DCI, a MAC CE, an RRC signaling, a downlink data channel, a downlink control channel, transmission of a specific downlink artificial intelligence-type data transmission channel, a specific downlink multicast channel, and a downlink broadcast channel.

Specifically, for example, the terminal device may configure the correspondence between the available computing resource of the terminal device and the computing power level of the terminal device by one or more of: an uplink data channel, an uplink control channel, uplink control information (Uplink Control Information, UCI), transmission of a specific uplink artificial intelligence-type data transmission channel, a specific uplink multicast channel, and an uplink broadcast channel.

In some embodiments, the first information may be carried by one of: a broadcast signaling, DCI, a MAC CE, an RRC signaling, a downlink data channel, a downlink control channel, transmission of a specific downlink artificial intelligence-type data transmission channel, a specific downlink multicast channel, and a downlink broadcast channel. And/or, the second information may be carried by one of: a broadcast signaling, DCI, a MAC CE, an RRC signaling, a downlink data channel, a downlink control channel, transmission of a specific downlink artificial intelligence-type data transmission channel, a specific downlink multicast channel, and a downlink broadcast channel.

In some embodiments, the terminal device sends third information and fourth information respectively;
where the third information includes at least one of: an available computing resource of the terminal device within the first duration, computing power of the terminal device within the first duration, and a computing power level of the terminal device within the first duration;
where the fourth information includes at least one of: an available computing resource of the terminal device within the second duration, computing power of the terminal device within the second duration, and a computing power level of the terminal device within the second duration.

Specifically, for example, as shown in FIG. 4, the terminal device reports the third information and the fourth information to the network device, respectively.

In some embodiments, the third information is UCI, or the third information is an RRC message. The third information is carried by at least one of: an uplink data channel, an uplink control channel, an uplink artificial intelligence data transmission channel, an uplink multicast channel, and an uplink broadcast channel. And/or, in some embodiments, the fourth information is UCI, or the fourth information is an RRC message. The fourth information is carried by at least one of: an uplink data channel, an uplink control channel, an uplink artificial intelligence data transmission channel, an uplink multicast channel, and an uplink broadcast channel.

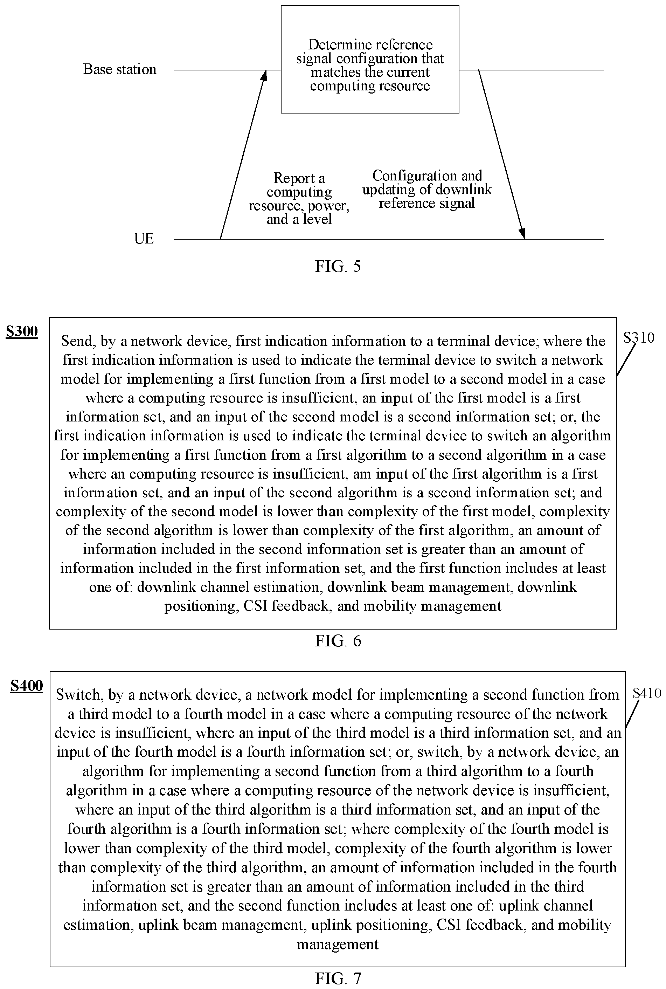

Specifically, for example, as shown in FIG. 5, the terminal device (UE) determines its own available computing resource. For example, the terminal device determines that an available computing resource at a first moment is a first category of computing resource, or, the terminal device determines that an available computing resource at a first moment corresponds to first computing power, or, the terminal device determines that an available computing resource at a first moment corresponds to a first computing power level. The terminal device reports current (i.e., the first moment) available computing resource information (e.g., the first category of computing resource, or, the first computing power, or, the first computing power level) to the network device. The network device (e.g., a base station) configures, to the terminal device, a first reference signal resource that matches the available computing resource information at the first moment according to the available computing resource information of the terminal device at the first moment. Optionally, the network device may further configure a first model or a first algorithm that matches the available computing resource information at the first moment, or the terminal device determines a first model or a first algorithm that matches the available computing resource information at the first moment. The terminal device acquires downlink channel information according to the first reference signal resource. At a second moment, the real-time available computing resource of the terminal device changes to a second category of computing resource, or to correspond to second computing power, or to correspond to a second computing power level, then, the terminal device reports or updates the available computing resource information (e.g., the second category of computing resource, or the second computing power, or the second computing power level) to the network device, and the network device configures, to the terminal device, a second reference signal resource that matches the available computing resource information at the second moment according to current (i.e., the second moment) available computing resource information of the terminal device. Optionally, the network device may further configure a second model or a second algorithm that matches the available computing resource information at the second moment, or the terminal device determines a second model or a second algorithm that matches the available computing resource information at the second moment. The terminal device acquires downlink channel information according to the second reference signal resource. Optionally, if the first category of computing resource is more or has a higher level than the second category of computing resource, channel information based on the second reference signal resource acquired by the terminal device is more than that base on the first reference signal resource acquired by the terminal device. For example, the second reference signal resource may be denser than the first reference signal resources in dimensions of time domain and frequency domain, thereby providing more refined channel information and implementing downlink channel estimation, downlink beam management, downlink positioning, CSI feedback, and mobility management, etc. Optionally, if the first category of computing resource is less or has a lower level than the second category of computing resource, channel information acquired by the terminal device based on the second reference signal resource is less than channel information acquired based on the first reference signal resource. For example, the second reference signal resource may be sparser than the first reference signal resources in dimensions of time domain and frequency domain, thereby providing less channel information and implementing downlink channel estimation, downlink beam management, downlink positioning, CSI feedback, and mobility management, etc. Optionally, when the computing resource at the second moment is worse than that at the first moment, less reference signals may be also configured, which corresponds to a case where the accuracy is abandoned and less computing time is pursued. Optionally, when the computing resource at the second moment is better than that at the first moment, more reference signals may be configured, corresponding to a case where a higher accuracy is pursued when the computing power is better.

Therefore, in the embodiments of the present disclosure, in a case where a computing resource of the terminal device is insufficient, the terminal device switches a network model for implementing a first function from a first model to a second model, complexity of the second model is lower than complexity of the first model, and an amount of information input into the second model is greater than an amount of information input into the first model, thereby capable of avoiding compromise in performance of the network model in a case where the computing resource is insufficient. Or, in a case where a computing resource of the terminal device is insufficient, the terminal device switches an algorithm for implementing the first function from a first algorithm to a second algorithm, complexity of the second algorithm is lower than complexity of the first algorithm, and an amount of information input into the second algorithm is greater than an amount of information input into the first algorithm, thereby capable of avoiding compromise in performance of the algorithm in the case where the computing resource is insufficient. That is, the present disclosure seeks no loss in terms of performance rather than pursuing higher performance under a more complex model.

The above describes in detail the embodiments of the present disclosure at a terminal side in combination with FIGS. 3 to 5. The following describes in detail the embodiments of the present disclosure at a network side in combination with FIG. 6. It should be understood that the embodiments at the network side and the embodiments at the terminal side correspond to each other, and similar descriptions may refer to the embodiments at the terminal side.

FIG. 6 is a schematic flow chart of a wireless communication method 300 according to the embodiments of the present disclosure. As shown in FIG. 6, the wireless communication method 300 may include at least part of the following contents.

In S310, a network device sends first indication information to a terminal device. The first indication information is used to indicate the terminal device to switch a network model for implementing a first function from a first model to a second model in a case where a computing resource is insufficient; an input of the first model is a first information set; and an input of the second model is a second information set. Or, the first indication information is used to indicate the terminal device to switch an algorithm for implementing a first function from a first algorithm to a second algorithm in a case where a computing resource is insufficient; an input of the first algorithm is a first information set; and an input of the second algorithm is a second information set, where complexity of the second model is lower than complexity of the first model, complexity of the second algorithm is lower than complexity of the first algorithm, and an amount of information included in the second information set is greater than an amount of information included in the first information set. The first function includes at least one of: downlink channel estimation, downlink beam management, downlink positioning, CSI feedback, and mobility management.

The main consideration in the present disclosure is that when a resource required to be used for machine learning and a neural network is limited, for example, a computing resource (e.g., a fixed computing resource or a real-time computing resource) is limited, more available information may be adopted as an input into a network model or an algorithm, thereby compensating for compromise in performance of the network model or the algorithm due to a limitation on the computing resource.

In the embodiments of the present disclosure, the first model and the second model may be AI models, or may also be non-AI models, which are not limited in the present disclosure.

In the embodiments of the present disclosure, in a case where a computing resource of the terminal device is insufficient, the terminal device switches a network model for implementing a first function from a first model to a second model, complexity of the second model is lower than complexity of the first model, and an amount of information input into the second model is greater than an amount of information input into the first model, thereby capable of avoiding compromise in performance of the network model in the case where the computing resource is insufficient. Or, in a case where the computing resource of the terminal device is insufficient, the terminal device switches an algorithm for implementing a first function from a first algorithm to a second algorithm, complexity of the second algorithm is lower than complexity of the first algorithm, and an amount of information input into the second algorithm is greater than an amount of information input into the first algorithm, thereby capable of avoiding compromise in performance of the algorithm in the case where the computing resource is insufficient. That is, the present disclosure seeks no loss in performance rather than pursuing higher performance under a more complex model.

In some embodiments, the first indication information may be carried by one of: a broadcast signaling, DCI, a MAC CE, an RRC signaling, a downlink data channel, a downlink control channel, transmission of a specific downlink artificial intelligence-type data transmission channel, a specific downlink multicast channel, and a downlink broadcast channel.

Specifically, for example, the first function is downlink channel estimation, and then, the first information set includes information for implementing the downlink channel estimation, and the second information set includes information for implementing the downlink channel estimation. In this case, the information for implementing the downlink channel estimation may be downlink channel information. Specifically, more downlink reference signal resources are configured, for example, in time domain and frequency domain, denser downlink reference signals are configured, and a larger configuration bandwidth is adopted, etc., thereby beneficial for more accurately acquiring downlink channel information, that is, acquiring the information included in the second information set for implementing the downlink channel estimation.

Specifically, for example, the first function is downlink beam management, and then, the first information set includes information for implementing the downlink beam management, and the second information set includes information for implementing the downlink beam management. In this case, the information for implementing the downlink beam management may be downlink beam information. Specifically, more downlink reference signal resources are configured, for example, in time domain and frequency domain, denser downlink reference signals are configured, and a larger configuration bandwidth is adopted, etc., thereby beneficial for accurately acquiring downlink beam information, that is, acquiring the information included in the second information set for implementing the downlink beam management.

Specifically, for example, the first function is downlink positioning, and then, the first information set includes information for implementing the downlink positioning, and the second information set includes information for implementing the downlink positioning. In this case, the information for implementing the downlink positioning may be downlink position information. Specifically, more downlink reference signal resources are configured, for example, in time domain and frequency domain, denser downlink reference signals are configured, and a larger configuration bandwidth is adopted, etc., thereby beneficial for more accurately acquiring the downlink position information, that is, acquiring the information included in the second information set for implementing the downlink positioning.

Specifically, for example, the first function is CSI feedback, and then, the first information set includes information for implementing the CSI feedback, and the second information set includes information for implementing the CSI feedback. In this case, the information for implementing the CSI feedback may be CSI information. Specifically, more CSI feedback bits (i.e., the second information set includes CSI information carried by the more CSI feedback bits) are configured, and more feedback bits will allow the fed-back CSI information to carry more accurate CSI information, thereby beneficial for acquiring better CSI recovery effect at a network side.

Specifically, for example, the first function is mobility management, and then, the first information set includes information for implementing the mobility management, and the second information set includes information for implementing the mobility management. In this case, the information for implementing the mobility management may be mobility information. Specifically, more reference signal resources are configured, for example, in time domain and frequency domain, denser reference signals are configured, and a larger configuration bandwidth is adopted, thereby beneficial for more accurately acquiring the mobile information, that is, acquiring the information included in the second information set for implementing the mobility management.

In some embodiments, the network device determines first information according to an available computing resource of the terminal device within a first duration, and the network device determines second information according to an available computing resource of the terminal device within a second duration. The available computing resource within the first duration is more than the available computing resource within the second duration. The first information is used to configure first downlink reference signal resource information, and the first downlink reference signal resource information is used for the terminal device to acquire the first information set. The second information is used to configure second downlink reference signal resource information, and the second downlink reference signal resource information is used for the terminal device to acquire the second information set. The network device sends the first information and the second information to the terminal device respectively.

It should be noted that this embodiment does not limit a length of the first duration. For example, when the length of the first duration is short, the first duration may be regarded as a moment. Similarly, this embodiment does not limit a length of the second duration. For example, when the length of the second duration is short, the second duration may be regarded as a moment.

In some embodiments, the first information is further used to configure a first model, and/or the second information is further used to configure a second model. That is, the first information may configure the first downlink reference signal resource information and the first model at the same time, and the second information may configure the second downlink reference signal resource information and the second model at the same time. In this case, the terminal device switches the network model for implementing the first function from the first model to the second model.

In some embodiments, the first information is further used to configure a first algorithm, and/or the second information is further used to configure a second algorithm. That is, the first information may configure the first downlink reference signal resource information and the first algorithm at the same time, and the second information may configure the second downlink reference signal resource information and the second algorithm at the same time. In this case, the terminal device witches the algorithm for implementing the first function from the first algorithm to the second algorithm.

In some embodiments, the first model is determined based on the available computing resource of the terminal device within the first duration, and/or the second model is determined based on the available computing resource of the terminal device within the second duration. In other words, the terminal device determines the first model according to the available computing resource of the terminal device within the first duration, and/or the terminal device determines the second model according to the available computing resource of the terminal device within the second duration. That is, the terminal device may determine the network model for implementing the first function based on its own available computing resource. In this case, the terminal device is configured with, for example, a correspondence between the available computing resource and the network model for implementing the first function.

In some embodiments, the first algorithm is determined based on the available computing resource of the terminal device within the first duration, and/or the second algorithm is determined based on the available computing resource of the terminal device within the second duration. In other words, the terminal device determines the first algorithm according to the available computing resource of the terminal device within the first duration, and/or the terminal device determines the second algorithm according to the available computing resource of the terminal device within the second duration. That is, the terminal device may determine the algorithm for implementing the first function based on its own available computing resource. In this case, the terminal device is configured with, for example, a correspondence between the available computing resource and the algorithm for implementing the first function.

In some embodiments, the available computing resource of the terminal device is determined by at least one of: computing power of the terminal device, and a computing power level of the terminal device. Optionally, the computing power of the terminal device includes fixed computing power and real-time computing power.

It should be noted that the evaluation of the computing power can be based on a number of calculations that can be performed per unit time as an indicator.

Specifically, the computing power may be divided based on a grade into N categories, for example, three categories: high performance, medium performance, and low performance.

In some embodiments, a correspondence between the available computing resource of the terminal device and the computing power of the terminal device is determined by at least one of: protocol agreement, pre-definition, pre-configuration of an operator, configuration of a network device, and configuration of the terminal device.

Specifically, for example, the network device may configure the correspondence between the available computing resource of the terminal device and the computing power of the terminal device by one or more of: broadcasting, DCI, a MAC CE, an RRC signaling, a downlink data channel, a downlink control channel, transmission of a specific downlink artificial intelligence-type data transmission channel, a specific downlink multicast channel, and an uplink broadcast channel.

Specifically, for example, the terminal device may configure the correspondence between the available computing resource of the terminal device and the computing power of the terminal device by one or more of: an uplink data channel, an uplink control channel, UCI, transmission of a specific uplink artificial intelligence-type data transmission channel, a specific uplink multicast channel, and an uplink broadcast channel.

In some embodiments, a correspondence between the available computing resource of the terminal device and the computing power level of the terminal device is determined by at least one of: protocol agreement, pre-definition, pre-configuration of an operator, configuration of a network device, and configuration of the terminal device.

Specifically, for example, the network device may configure the correspondence between the available computing resource of the terminal device and the computing power level of the terminal device by one or more of: broadcasting, DCI, a MAC CE, an RRC signaling, a downlink data channel, a downlink control channel, transmission of a specific downlink artificial intelligence-type data transmission channel, a specific downlink multicast channel, and a downlink broadcast channel.

Specifically, for example, the terminal device may configure the correspondence between the available computing resource of the terminal device and the computing power level of the terminal device by one or more of: an uplink data channel, an uplink control channel, UCI, transmission of a specific uplink artificial intelligence-type data transmission channel, a specific uplink multicast channel, and an uplink broadcast channel.

In some embodiments, the first information may be carried by one of: a broadcast signaling, DCI, a MAC CE, an RRC signaling, a downlink data channel, a downlink control channel, transmission of a specific downlink artificial intelligence-type data transmission channel, a specific downlink multicast channel, and a downlink broadcast channel. And/or, the second information may be carried by one of: a broadcast signaling, DCI, a MAC CE, an RRC signaling, a downlink data channel, a downlink control channel, transmission of a specific downlink artificial intelligence-type data transmission channel, a specific downlink multicast channel, and a downlink broadcast channel.

In some embodiments, the network device receives third information and fourth information sent respectively by the terminal device.

The third information includes at least one of: the available computing resource of the terminal device within the first duration, computing power of the terminal device within the first duration, and a computing power level of the terminal device within the first duration. The fourth information includes at least one of: the available computing resource of the terminal device within the second duration, computing power of the terminal device within the second duration, and a computing power level of the terminal device within the second duration.

In some embodiments, the third information is UCI, or the third information is an RRC message. The third information is carried by at least one of: an uplink data channel, an uplink control channel, an uplink artificial intelligence data transmission channel, an uplink multicast channel, and an uplink broadcast channel. And/or, the fourth information is UCI, or the fourth information is an RRC message. The fourth information is carried by at least one of: an uplink data channel, an uplink control channel, an uplink artificial intelligence data transmission channel, an uplink multicast channel, and an uplink broadcast channel.

Therefore, in the embodiments of the present disclosure, the network device may indicate the terminal device to switch a network model for implementing a first function from a first model to a second model in a case where the computing resource is insufficient, complexity of the second model is lower than complexity of the first model, and an amount of information input into the second model is greater than an amount of information input into the first model, thereby capable of avoiding compromise in performance of the network model in the case where the computing resource is insufficient. Or, the network device may indicate the terminal device to switch an algorithm for implementing a first function from a first algorithm to a second algorithm in a case where the computing resource is insufficient, complexity of the second algorithm is lower than complexity of the first algorithm, and an amount of information input into the second algorithm is greater than an amount of information input into the first algorithm, thereby capable of avoiding compromise in performance of the algorithm in the case where the computing resource is insufficient. That is, the present disclosure seeks no loss in performance rather than pursuing higher performance under a more complex model.

FIG. 7 is a schematic flow chart of a wireless communication method 400 according to the embodiments of the present disclosure. As shown in FIG. 7, the wireless communication method 400 may include at least part of the following contents.

In S410, in a case where a computing resource of a network device is insufficient, the network device switches a network model for implementing a second function from a third model to a fourth model, an input of the third model is a third information set, and an input of the fourth model is a fourth information set; or, in a case where a computing resource of a network device is insufficient, the network device switches an algorithm for implementing a second function from a third algorithm to a fourth algorithm, an input of the third algorithm is a third information set, and an input of the fourth algorithm is a fourth information set. Complexity of the fourth model is lower than complexity of the third model, complexity of the fourth algorithm is lower than complexity of the third algorithm, and an amount of information included in the fourth information set is greater than an amount of information included in the third information set. The second function includes at least one of: uplink channel estimation, uplink beam management, uplink positioning, CSI feedback, and mobility management.

It should be noted that, as for a wireless communication system, an understanding may be to provide more information in the solution, which will result in greater computing complexity, but can acquire a higher accuracy of a model. However, the above conception does not fully consider a problem of a long calculation time due to complexity of a calculation. In addition, such increasing in accuracy brought by increasing provided information is difficult to be acquired in actual wireless communication. In the embodiments of the present disclosure, when it is considered that a simple model needs to be used due to a limitation on the computing resource, so as to complete the calculation of the model at the same time, if the simple model will cause a compromise in performance, more information needs to be provided to the simple model to compensate for the compromise in performance. What to be sought herein in terms of performance is no loss, rather than pursuing higher performance under a more complex model. In a specific design, the present disclosure proposes a solution for updating information configuration based on different terminal devices, in terms of mutual relationships and adaptation among a computing resource, computing time, computing accuracy, and available information.

In the present disclosure, the main consideration is that when a resource required to be used for machine learning and a neural network is limited, for example, a computing resource (e.g., a fixed computing resource or a real-time computing resource) is limited, more available information may be adopted as an input into the network model or algorithm, thereby compensating for a compromise in performance of the network model or algorithm due to a limitation on the computing resource.

In the embodiments of the present disclosure, the third model and the fourth model may be AI models or may also be non-AI models, which are not limited in the present disclosure.

In the embodiments of the present disclosure, in a case where a computing resource of a network device is insufficient, the network device switches a network model for implementing a second function from a third model to a fourth model, complexity of the fourth model is lower than complexity of the third model, and an amount of information input into the fourth model is greater than an amount of information input into the third model, thereby capable of avoiding the compromise in performance of the network model in the case where the computing resource is insufficient. Or, in a case where the computing resource of the network device is insufficient, the network device switches an algorithm for implementing a second function from a third algorithm to a fourth algorithm, complexity of the fourth algorithm is lower than complexity of the third algorithm, and an amount of information input into the fourth algorithm is greater than an amount of information input into the third algorithm, thereby capable of avoiding the compromise in performance of the algorithm in the case where the computing resource is insufficient. That is, the present disclosure seeks no loss in performance rather than pursuing higher performance under a more complex model.

Specifically, for example, the second function is uplink channel estimation, and then, the third information set includes information for implementing the uplink channel estimation, and the fourth information set includes information for implementing the uplink channel estimation. In this case, the information for implementing the uplink channel estimation may be uplink channel information. Specifically, more uplink reference signal resources are configured, for example, in time domain and frequency domain, denser uplink reference signals are configured, and a larger configuration bandwidth is adopted, etc., thereby beneficial for more accurately acquiring the uplink channel information, that is, acquiring the information included in the fourth information set for implementing the uplink channel estimation.

Specifically, for example, the second function is uplink beam management, and then, the third information set includes information for implementing the uplink beam management, and the fourth information set includes information for implementing the uplink beam management. In this case, the information for implementing the uplink beam management may be uplink beam information. Specifically, more uplink reference signal resources are configured, for example, in time domain and frequency domain, denser uplink reference signals are configured, and a larger configuration bandwidth is adopted, thereby beneficial for more accurately acquiring the uplink beam information, that is, acquiring the information included in the fourth information set for implementing the uplink beam management.

Specifically, for example, the second function is uplink positioning, and then, the third information set includes information for implementing the uplink positioning, and the fourth information set includes information for implementing the uplink positioning. In this case, the information for implementing the uplink positioning may be uplink position information. Specifically, more uplink reference signal resources are configured, for example, in time domain and frequency domain, denser uplink reference signals are configured, and a larger configuration bandwidth is adopted, etc., thereby beneficial for more accurately acquiring the uplink position information, that is, acquiring the information included in the fourth information set for implementing the uplink positioning.

Specifically, for example, the second function is CSI feedback, and then, the third information set includes information for implementing the CSI feedback, and the fourth information set includes information for implementing the CSI feedback. In this case, the information for implementing the CSI feedback may be CSI information. Specifically, more CSI feedback bits (i.e., the fourth information set includes the CSI information carried by more CSI feedback bits) are configured, and more feedback bits will allow the fed-back CSI information to carry more accurate CSI information, thereby beneficial for acquiring better CSI recovery effect on a terminal side.

Specifically, for example, the second function is mobility management, and then, the third information set includes information for implementing the mobility management, and the fourth information set includes information for implementing the mobility management. In this case, the information for implementing the mobility management may be mobility information. Specifically, more reference signal resources are configured, for example, in time domain and frequency domain, denser reference signals are configured, and a larger configuration bandwidth is adopted, etc., thereby beneficial for more accurately acquiring the mobile information, that is, acquiring the information included in the fourth information set for implementing the mobility management.

In some embodiments, the network device sends fifth information and sixth information to the terminal device respectively;
where the fifth information is determined based on an available computing resource of the network device within a third duration, and the fifth information is used to configure first uplink reference signal resource information, the sixth information is determined based on an available computing resource of the network device within a fourth duration, and the sixth information is used to configure second uplink reference signal resource information;
where the available computing resource within the third duration is more than the available computing resource within the fourth duration, the third information set is determined based on an uplink reference signal sent by the terminal device through the first uplink reference signal resource information, and the fourth information set is determined based on an uplink reference signal sent by the terminal device through the second uplink reference signal resource information.

In some embodiments, the fifth information may be carried by one of: a broadcast signaling, DCI, a MAC CE, an RRC signaling, a downlink data channel, a downlink control channel, transmission of a specific downlink artificial intelligence-type data transmission channel, a specific downlink multicast channel, and a downlink broadcast channel, and/or, the sixth information may be carried by one of: a broadcast signaling, DCI, a MAC CE, an RRC signaling, a downlink data channel, a downlink control channel, transmission of a specific downlink artificial intelligence-type data transmission channel, a specific downlink multicast channel, and a downlink broadcast channel.

In some embodiments, the network device sends seventh information and eighth information to the terminal device respectively;
where the seventh information is determined based on an available computing resource of the network device within a third duration, and the eighth information is determined based on an available computing resource of the network device within a fourth duration, the seventh information is used to configure the third model, and the eighth information is used to configure the fourth model; or the seventh information is used to configure the third algorithm, and the eighth information is used to configure the fourth algorithm, the available computing resource within the third duration is more than the available computing resource within the fourth duration.
where the third model and the fourth model are CSI feedback models, the third information set is determined based on CSI information fed back by the terminal device by means of the third model, and the fourth information set is determined based on CSI information fed back by the terminal device by means of the fourth model, or, the third algorithm and the fourth algorithm are CSI feedback algorithms, the third information set is determined based on CSI information fed back by the terminal device by means of the third algorithm, and the fourth information set is determined based on CSI information fed back by the terminal device by means of the fourth algorithm.

In some embodiments, the seventh information may be carried by one of: a broadcast signaling, DCI, a MAC CE, an RRC signaling, a downlink data channel, a downlink control channel, transmission of a specific downlink artificial intelligence-type data transmission channel, a specific downlink multicast channel, and a downlink broadcast channel. And/or, the eighth information may be carried by one of: a broadcast signaling, DCI, a MAC CE, an RRC signaling, a downlink data channel, a downlink control channel, transmission of a specific downlink artificial intelligence-type data transmission channel, a specific downlink multicast channel, and a downlink broadcast channel.

In some embodiments, the network device sends ninth information and tenth information to the terminal device respectively;
where the ninth information is determined based on an available computing resource of the network device within a third duration, and the ninth information is used to configure first positioning reference signal resource information, the tenth information is determined based on an available computing resource of the network device within a fourth duration, and the tenth information is used to configure second positioning reference signal resource information.
where the available computing resource within the third duration is more than the available computing resource within the fourth duration, the third information set is determined based on positioning information acquired by the terminal device by means of the first positioning reference signal resource information, and the fourth information set is determined based on positioning information acquired by the terminal device by means of the second positioning reference signal resource information.

In some embodiments, the ninth information may be carried by one of: a broadcast signaling, DCI, a MAC CE, an RRC signaling, a downlink data channel, a downlink control channel, transmission of a specific downlink artificial intelligence-type data channel, a specific downlink multicast channel, and a downlink broadcast channel. And/or, the tenth information may be carried by one of: a broadcast signaling, DCI, a MAC CE, an RRC signaling, a downlink data channel, a downlink control channel, transmission of a specific downlink artificial intelligence-type data transmission channel, a specific downlink multicast channel, and a downlink broadcast channel.

It should be noted that this embodiment does not limit a length of the third duration. For example, when the length of the third duration is short, the third duration may be regarded as a moment. Similarly, this embodiment does not limit a length of the fourth duration. For example, when the length of the fourth duration is short, the fourth duration may be regarded as a moment.

In some embodiments, the network device determines the third model according to the available computing resource of the network device within the third duration, and/or the network device determines the fourth model according to the available computing resource of the network device within the fourth duration. That is, the network device may determine the network model for implementing the second function based on its own available computing resource. In this case, the network device is configured with, for example, a correspondence between the available computing resource and the network model for implementing the second function.

In some embodiments, the network device determines the third algorithm based on the available computing resource of the network device within the third duration, and/or the network device determines the fourth algorithm based on the available computing resource of the network device within the fourth duration. That is, the network device may determine the algorithm for implementing the second function based on its own available computing resource. In this case, the network device is configured with, for example, a correspondence between the available computing resource and the algorithm for implementing the second function.

In some embodiments, the available computing resource of the network device is determined by at least one of: computing power of the network device, and a computing power level of the network device. Optionally, the computing power of the network device includes fixed computing power and real-time computing power.

It should be noted that the evaluation of the computing power can be based on a number of calculations that can be performed per unit time as an indicator.

Specifically, the computing power may be divided based on a grade into N categories, for example, three categories: high performance, medium performance, and low performance.

In some embodiments, a correspondence between the available computing resource of the network device and the computing power of the network device is determined by at least one of: protocol agreement, pre-definition, pre-configuration of an operator, configuration of the network device, and configuration of the terminal device.

Specifically, for example, the terminal device may configure the correspondence between the available computing resource of the network device and the computing power of the network device by one or more of: an uplink data channel, an uplink control channel, UCI, transmission of a specific uplink artificial intelligence-type data transmission channel, a specific uplink multicast channel, and an uplink broadcast channel.

In some embodiments, a correspondence between the available computing resource of the network device and the computing power level of the network device is determined by at least one of: protocol agreement, pre-definition, pre-configuration of an operator, configuration of a network device, and configuration of a terminal device.

Specifically, for example, the terminal device may configure the correspondence between the available computing resource of the network device and the computing power level of the network device by one or more of: an uplink data channel, an uplink control channel, UCI, transmission of a specific uplink artificial intelligence-type data transmission channel, a specific uplink multicast channel, and an uplink broadcast channel.

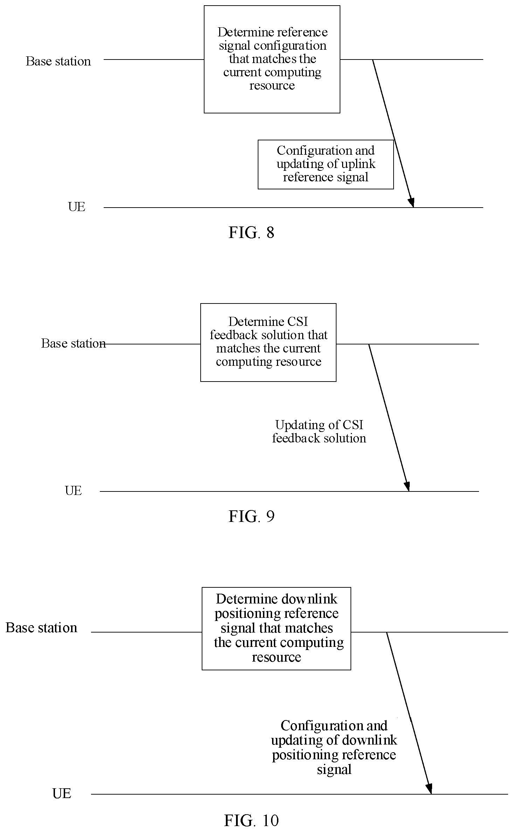

Example 1: when uplink channel estimation, uplink beam management, uplink positioning, etc., are performed, the network model or algorithm is deployed on the network side. In this case, as shown in FIG. 8, the network device (base station) determines its own real-time available computing resource. For example, the network device determines that the available computing resource at a first moment is a first category of computing resource, or the network device determines that the available computing resource at a first moment corresponds to a first computing power, or the network device determines that the available computing resource at a first moment corresponds to a first computing power level. The network device configures, to the terminal device (UE), a first reference signal resource (an uplink reference signal) that matches the available computing resource information at the first moment according to the available computing resource information (the first category of computing resource, or the first computing power, or the first computing power level) at the first moment. Optionally, the network device may also determine a third model or a third algorithm that matches the available computing resource information (the first category of computing resource, or the first computing power, or the first computing power level) at the first moment. The terminal device sends an uplink reference signal based on the first reference signal resource. At a second moment, the real-time available computing resource of the network device is a second category of computing resource, or, corresponds to a second computing power, and the network device configures, to the terminal device, a second reference signal resource (an uplink reference signal) that matches the available computing resource information at the second moment. The network device may also determine a fourth model or a fourth algorithm that matches the available computing resource information (the second category of computing resource, or the second computing power, or the second computing power level) at the second moment. The terminal device sends an uplink reference signal based on the second reference signal resource. Optionally, if the first category of computing resource is more or has a higher level than the second category of computing resource, the uplink reference signals sent by the terminal device based on the second reference signal resource is more than the uplink reference signals sent by the terminal device based on the first reference signal resource. Thus, channel information acquired by the network device through the uplink reference signal sent by the terminal device based on the second reference signal resource is more than the uplink reference signal sent by the network device based on the first reference signal resource. For example, the second reference signal resource may be denser than the first reference signal resource in dimensions of time domain and frequency domain, thereby providing more refined channel information and implementing uplink channel estimation, uplink beam management, uplink positioning, CSI feedback, mobility management, etc. Optionally, if the first category of computing resource is less or has a weaker level than the second category of computing resource, the uplink reference signal sent by the terminal device based on the second reference signal resource is less than the uplink reference signal sent by the terminal device based on the first reference signal resource. Thus, channel information acquired by the network device through the uplink reference signal sent by the terminal device based on the second reference signal resource is less than the channel information acquired by the network device based on the uplink reference signal sent by the first reference signal resource. For example, the second reference signal resource may be sparser than the first reference signal resource in dimensions of time domain and frequency domain, thereby providing less channel information and implementing uplink channel estimation, uplink beam management, uplink positioning, CSI feedback, mobility management, etc. Optionally, when the computing resource at the second moment is worse than that at the first moment, less uplink reference signals may be configured, corresponding to a case where the accuracy is abandoned and less computing time is pursued. Optionally, when the computing resource at the second moment is better than that at the first moment, more uplink reference signals may also be configured, corresponding to a case where a higher accuracy is pursued when the computing power is better.

Example 2, as shown in FIG. 9, the network device (the base station) determines its own real-time available computing resource. For example, the network device determines that an available computing resource at a first moment is a first category of computing resource, or the network device determines that an available computing resource at a first moment corresponds to a first computing power, or the network device determines that an available computing resource at a first moment corresponds to a first computing power level. The network device configures, to the terminal device (UE), a first CSI feedback model that matches the available computing resource information at the first moment according to the available computing resource information at the first moment (the first category of computing resource, or the first computing power, or the first computing power level). The terminal device uses the first CSI model to perform CSI feedback, and a feedback amount required is of Ni bits. At a second moment, the real-time available computing resource of the network device is a second category of computing resource, or corresponds to a second computing power, and then, the network device configures, to the terminal device, a second CSI feedback model that matches the available computing resource information at the second moment according to the computing resource or the computing power at the second moment. The terminal device uses the second CSI model to perform CSI feedback, and a feedback amount required is of N₂ bits. Optionally, if the first category of computing resource is more or has a higher level than the second category of computing resource, after the CSI feedback model is updated, the terminal device may feed back more CSI information to the network device, so that the network device can achieve completion of high-precision CSI information recovery within a specific time using a relatively simple model, under limited computing power, on a premise of more CSI information. For example, N₂ may be greater than Ni at this time.

Example 3: as for the positioning problem, when a positioning model is deployed on a network device or a positioning server side, although the reference signal for positioning is still a downlink reference signal, since a positioning calculation occurs on the network device or the positioning server side at this time, computing power that affects the overall performance is still the real-time computing power of the network device at this time. Specifically, as shown in FIG. 10, for example, the network device (the base station) determines that an available computing resource at a first moment is a first category of computing resource, or the network device determines that an available computing resource at a first moment corresponds to a first computing power, or the network device determines that an available computing resource at a first moment corresponds to a first computing power level. The network device configures, to the terminal device (UE), a first reference signal resource (a downlink reference signal, or a positioning reference signal) that matches the available computing resource information at a first moment according to the available computing resource information at the first moment (the first category of computing resource, or the first computing power, or the first computing power level). Optionally, the network device may also determine a third model or a third algorithm that matches the available computing resource information (the first category of computing resource, or the first computing power, or the first computing power level) at the first moment. The terminal device acquires a first reference signal based on a first reference signal resource, the terminal device acquires first positioning information based on the first reference signal, the terminal device sends the first positioning information to the network device, and the network device determines a positioning result based on the first positioning information. At a second moment, the real-time available computing resource of the network device is a second category of computing resource, or corresponds to a second computing power, and the network device configures, to the terminal device, a second reference signal resource (a downlink reference signal, or a positioning reference signal) that matches the available computing resource information at the second moment. The network device may also determine a fourth model or a fourth algorithm that matches the available computing resource information (the second category of computing resource, or the second computing power, or the second computing power level) at the second moment. The terminal device acquires a second reference signal based on the second reference signal resource, the terminal device acquires second positioning information based on the second reference signal, the terminal device sends the second positioning information to the network device, and the network device determines a positioning result based on the second positioning information. If the first category of computing resource is more or has a higher level than the second category of computing resource, the second reference signal resource can provide more channel information than the first reference signal resource. For example, the second reference signal may be denser than the first reference signal in dimensions of time domain and frequency domain, thereby providing more refined channel information for solving the problems, such as uplink positioning, etc.

It should be noted that the positioning server may be considered as a special type of network device, which will not be repeated and decomposed herein. The network device described in the present disclosure may be considered to include the positioning server.

Therefore, in the embodiments of the present disclosure, in a case where the computing resource of the network device is insufficient, the network device switches a network model for implementing a second function from a third model to a fourth model, complexity of the fourth model is lower than complexity of the third model, and an amount of information input into the fourth model is greater than an amount of information input into the third model, thereby capable of avoiding the compromise in performance of the network model in the case where the computing resource is insufficient. Or, in a case where the computing resource of the network device is insufficient, the network device switches an algorithm for implementing a second function from a third algorithm to a fourth algorithm, complexity of the fourth algorithm is lower than complexity of the third algorithm, and an amount of information input into the fourth algorithm is greater than an amount of information input into the third algorithm, thereby capable of avoiding the compromise in performance of the algorithm in the case where the computing resource is insufficient. That is, the present disclosure seeks no loss in performance rather than pursuing higher performance under a more complex model.

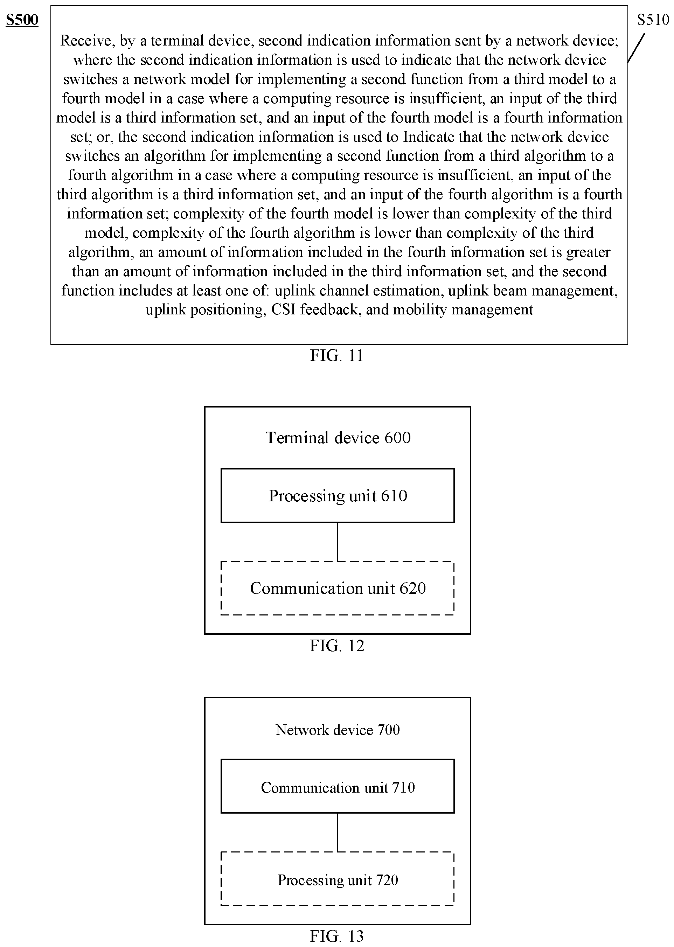

The above in combination with FIGS. 7 to 10 describes in detail the embodiments of the present disclosure at the terminal side. The following in combination with FIG. 11 describes in detail the embodiments of the present disclosure at the network side. It should be understood that the embodiments at the network side and the embodiments at the terminal side correspond to each other, and similar descriptions may refer to the embodiments at the terminal side.

FIG. 11 is a schematic flow chart of a wireless communication method 500 according to the embodiments of the present disclosure. As shown in FIG. 11, the wireless communication method 500 may include at least part of the following contents.

In S510, a terminal device receives second indication information sent by a network device. The second indication information is used to indicate that the network device switches a network model for implementing a second function from a third model to a fourth model in a case where the computing resource is insufficient, an input of the third model is a third information set, and an input of the fourth model is a fourth information set; or, the second indication information is used to indicate that the network device switches an algorithm for implementing a second function from a third algorithm to a fourth algorithm in a case where the computing resource is insufficient, an input of the third algorithm is a third information set, and an input of the fourth algorithm is a fourth information. Complexity of the fourth model is lower than complexity of the third model, complexity of the fourth algorithm is lower than complexity of the third algorithm, and an amount of information included in the fourth information set is greater than an amount of information included in the third information set. The second function includes at least one of: uplink channel estimation, uplink beam management, uplink positioning, CSI feedback, and mobility management.

It should be noted that, as for a wireless communication system, an understanding may be to provide more information in the solution, which will result in greater computing complexity, but can acquire a higher accuracy of a model. However, the above conception does not fully consider a problem of a long calculation time due to complexity of a calculation. In addition, such increasing in accuracy brought by increasing provided information is difficult to be acquired in actual wireless communication. In the embodiments of the present disclosure, when it is considered that a simple model needs to be used due to a limitation on the computing resource, so as to complete the calculation of the model at the same time, if the simple model will cause a compromise in performance, more information needs to be provided to the simple model to compensate for the compromise in performance. What to be sought herein in terms of performance is no loss, rather than pursuing higher performance under a more complex model. In a specific design, the present disclosure proposes a solution for updating information configuration based on different terminal devices, in terms of mutual relationships and adaptation among a computing resource, the computing time, the computing accuracy, and the available information.

The main consideration in the present disclosure is that when a resource required to be used for machine learning and a neural network is limited, for example, a computing resource (e.g., a fixed computing resource or a real-time computing resource) is limited, more available information may be adopted as an input into the network model or algorithm, thereby compensating for the compromise in performance of the network model or algorithm due to a limitation on the computing resource.

In the embodiments of the present disclosure, the third model and the fourth model may be AI models or may also be non-AI models, which are not limited in the present disclosure.

In the embodiments of the present disclosure, in a case where the computing resource of the network device is insufficient, the network device switches a network model for implementing a second function from a third model to a fourth model, complexity of the fourth model is lower than complexity of the third model, and an amount of information input into the fourth model is greater than an amount of information input into the third model, thereby capable of avoiding the compromise in performance of the network model in the case where the computing resource is insufficient. Or, in a case where the computing resource of the network device is insufficient, the network device switches an algorithm for implementing a second function from a third algorithm to a fourth algorithm, complexity of the fourth algorithm is lower than complexity of the third algorithm, and an amount of information input into the fourth algorithm is greater than an amount of information input into the third algorithm, thereby capable of avoiding the compromise in performance of the algorithm in the case where the computing resource is insufficient. That is, the present disclosure seeks no loss in performance rather than pursuing higher performance under a more complex model.

In some embodiments, the second indication information may be carried by one of: a broadcast signaling, DCI, a MAC CE, an RRC signaling, a downlink data channel, a downlink control channel, transmission of a specific downlink artificial intelligence-type data transmission channel, a specific downlink multicast channel, and a downlink broadcast channel.

Specifically, for example, the second function is uplink channel estimation, and then, the third information set includes information for implementing the uplink channel estimation, and the fourth information set includes information for implementing the uplink channel estimation. In this case, the information for implementing the uplink channel estimation may be uplink channel information. Specifically, more uplink reference signal resources are configured, for example, in time domain and frequency domain, denser uplink reference signals are configured, and a larger configuration bandwidth is adopted, etc., thereby beneficial for more accurately acquiring the uplink channel information, that is, acquiring the information included in the fourth information set for implementing the uplink channel estimation.

Specifically, for example, the second function is uplink beam management, and then, the third information set includes information for implementing the uplink beam management, and the fourth information set includes information for implementing the uplink beam management. In this case, the information for implementing the uplink beam management may be uplink beam information. Specifically, more uplink reference signal resources are configured, for example, in time domain and frequency domain, denser uplink reference signals are configured, and a larger configuration bandwidth is adopted, thereby beneficial for more accurately acquiring the uplink beam information, that is, acquiring the information included in the fourth information set for implementing the uplink beam management.

Specifically, for example, the second function is uplink positioning, and then, the third information set includes information for implementing the uplink positioning, and the fourth information set includes information for implementing the uplink positioning. In this case, the information for implementing the uplink positioning may be uplink position information. Specifically, more uplink reference signal resources are configured, for example, in time domain and frequency domain, denser uplink reference signals are configured, and a larger configuration bandwidth is adopted, etc., thereby beneficial for more accurately acquiring the uplink position information, that is, acquiring the information included in the fourth information set for implementing the uplink positioning.

Specifically, for example, the second function is CSI feedback, and then, the third information set includes information for implementing the CSI feedback, and the fourth information set includes information for implementing the CSI feedback. In this case, the information for implementing the CSI feedback may be CSI information. Specifically, more CSI feedback bits (i.e., the fourth information set includes the CSI information carried by more CSI feedback bits) are configured, and more feedback bits will allow the fed-back CSI information to carry more accurate CSI information, thereby beneficial for acquiring better CSI recovery effect on a terminal side.

Specifically, for example, the second function is mobility management, and then, the third information set includes information for implementing the mobility management, and the fourth information set includes information for implementing the mobility management. In this case, the information for implementing the mobility management may be mobility information. Specifically, more reference signal resources are configured, for example, in time domain and frequency domain, denser reference signals are configured, and a larger configuration bandwidth is adopted, etc., thereby beneficial for more accurately acquiring the mobile information, that is, acquiring the information included in the fourth information set for implementing the mobility management.

In some embodiments, the terminal device receives fifth information and sixth information sent by the network device respectively;
where the fifth information is determined based on an available computing resource of the network device within a third duration, and the fifth information is used to configure first uplink reference signal resource information. The sixth information is determined based on an available computing resource of the network device within a fourth duration, and the sixth information is used to configure second uplink reference signal resource information.
where the available computing resource within the third duration is more than the available computing resource within the fourth duration. The third information set is determined based on an uplink reference signal sent by the terminal device through the first uplink reference signal resource information, and the fourth information set is determined based on an uplink reference signal sent by the terminal device through the second uplink reference signal resource information.

In some embodiments, the fifth information may be carried by one of: a broadcast signaling, DCI, a MAC CE, an RRC signaling, a downlink data channel, a downlink control channel, transmission of a specific downlink artificial intelligence-type data transmission channel, a specific downlink multicast channel, and a downlink broadcast channel. And/or, the sixth information may be carried by one of: a broadcast signaling, DCI, a MAC CE, an RRC signaling, a downlink data channel, a downlink control channel, transmission of a specific downlink artificial intelligence-type data transmission channel, a specific downlink multicast channel, and a downlink broadcast channel.

In some embodiments, the terminal device receives seventh information and eighth information sent by the network device respectively;
where the seventh information is determined based on an available computing resource of the network device within a third duration, and the eighth information is determined based on an available computing resource of the network device within a fourth duration. The seventh information is used to configure the third model, and the eighth information is used to configure the fourth model; or the seventh information is used to configure the third algorithm, and the eighth information is used to configure the fourth algorithm. The available computing resource within the third duration is more than the available computing resource within the fourth duration.
where the third model and the fourth model are CSI feedback models, the third information set is determined based on CSI information fed back by the terminal device by means of the third model, and the fourth information set is determined based on CSI information fed back by the terminal device by means of the fourth model. Or, the third algorithm and the fourth algorithm are CSI feedback algorithms, the third information set is determined based on CSI information fed back by the terminal device by means of the third algorithm, and the fourth information set is determined based on CSI information fed back by the terminal device by means of the fourth algorithm.

In some embodiments, the seventh information may be carried by one of: a broadcast signaling, DCI, a MAC CE, an RRC signaling, a downlink data channel, a downlink control channel, transmission of a specific downlink artificial intelligence-type data transmission channel, a specific downlink multicast channel, and a downlink broadcast channel. And/or, the eighth information may be carried by one of: a broadcast signaling, DCI, a MAC CE, an RRC signaling, a downlink data channel, transmission of a downlink control channel, a specific downlink artificial intelligence-type data transmission channel, a specific downlink multicast channel, and a downlink broadcast channel.

In some embodiments, the terminal device receives ninth information and tenth information sent by the network device respectively;
where the ninth information is determined based on an available computing resource of the network device within a third duration, and the ninth information is used to configure first positioning reference signal resource information. The tenth information is determined based on an available computing resource of the network device within a fourth duration, and the tenth information is used to configure second positioning reference signal resource information.
where the available computing resource within the third duration is more than the available computing resource within the fourth duration. The third information set is determined based on positioning information acquired by the terminal device by means of the first positioning reference signal resource information, and the fourth information set is determined based on positioning information acquired by the terminal device by means of the second positioning reference signal resource information.

In some embodiments, the ninth information may be carried by one of: a broadcast signaling, DCI, a MAC CE, an RRC signaling, a downlink data channel, a downlink control channel, transmission of a specific downlink artificial intelligence-type data channel, a specific downlink multicast channel, and a downlink broadcast channel. And/or, the tenth information may be carried by one of: a broadcast signaling, DCI, a MAC CE, an RRC signaling, a downlink data channel, a downlink control channel, transmission of a specific downlink artificial intelligence-type data transmission channel, a specific downlink multicast channel, and a downlink broadcast channel.

It should be noted that this embodiment does not limit a length of the third duration. For example, when the length of the third duration is short, the third duration may be regarded as a moment. Similarly, this embodiment does not limit a length of the fourth duration. For example, when the length of the fourth duration is short, the fourth duration may be regarded as a moment.

In some embodiments, the third model is determined based on the available computing resource of the network device within the third duration, and/or the fourth model is determined based on the computing available resource of the network device within the fourth duration. In other words, the network device determines the third model according to the available computing resource of the network device within the third duration, and/or the network device determines the fourth model according to the available computing resource of the network device within the fourth duration. That is, the network device may determine the network model for implementing the second function based on its own available computing resource. In this case, the network device is configured with, for example, a correspondence between the available computing resource and the network model for implementing the second function.

In some embodiments, the third algorithm is determined based on the available computing resource of the network device within the third duration, and/or the fourth algorithm is determined based on the available computing resource of the network device within the fourth duration. In other words, the network device determines the third algorithm according to the available computing resource of the network device within the third duration, and/or the network device determines the fourth algorithm according to the available computing resource of the network device within the fourth duration. That is, the network device may determine the algorithm for implementing the second function based on its own available computing resource. In this case, the network device is configured with, for example, a correspondence between the available computing resource and the algorithm for implementing the second function.

In some embodiments, the available computing resource of the network device is determined by at least one of: computing power of the network device, and a computing power level of the network device.

In some embodiments, the available computing resource of the network device is determined by at least one of: computing power of the network device, and a computing power level of the network device. Optionally, the computing power of the network device includes fixed computing power and real-time computing power.

It needs to be noted that the evaluation of the computing power can be based on a number of calculations that can be performed per unit time as an indicator.

Specifically, the computing power may be divided based on a grade into N categories, for example, three categories: high performance, medium performance, and low performance.

In some embodiments, a correspondence between the available computing resource of the network device and the computing power of the network device is determined by at least one of: protocol agreement, pre-definition, pre-configuration of an operator, configuration of the network device, and configuration of the terminal device.

Specifically, for example, the terminal device may configure the correspondence between the available computing resource of the network device and the computing power of the network device through one or more of: an uplink data channel, an uplink control channel, UCI, transmission of a specific uplink artificial intelligence-type data transmission channel, a specific uplink multicast channel, and an uplink broadcast channel.

In some embodiments, a correspondence between the available computing resource of the network device and the computing power level of the network device is determined by at least one of: protocol agreement, pre-definition, pre-configuration of an operator, configuration of the network device, and configuration of the terminal device.

Therefore, in the embodiments of the present disclosure, in a case where the computing resource of the network device is insufficient, the network device switches a network model for implementing a second function from a third model to a fourth model, complexity of the fourth model is lower than complexity of the third model, and an amount of information input into the fourth model is greater than an amount of information input into the third model, thereby capable of avoiding the compromise in performance of the network model in the case where the computing resource is insufficient. Or, in a case where the computing resource of the network device is insufficient, the network device switches an algorithm for implementing a second function from a third algorithm to a fourth algorithm, complexity of the fourth algorithm is lower than complexity of the third algorithm, and an amount of information input into the fourth algorithm is greater than an amount of information input into the third algorithm, thereby capable of avoiding the compromise in performance of the algorithm in a case where the computing resource is insufficient. That is, the present disclosure seeks no loss in performance rather than pursuing higher performance under a more complex model.

The above in combination with FIGS. 3 to 11 describes in detail the method embodiments of the present disclosure. The following in combination with FIGS. 12 to 15 describes in detail the apparatus embodiments of the present disclosure. It should be understood that the apparatus embodiments and the method embodiments correspond to each other, and similar description may refer to the method embodiments.

FIG. 12 shows a block diagram of a terminal device 600 according to the embodiments of the present disclosure. As shown in FIG. 12, the terminal device 600 includes a processing unit 610, where
in a case where a computing resource of the terminal device is insufficient, the processing unit 610 is configured to switch a network model for implementing a first function from a first model to a second model, an input of the first model is a first information set, and an input of the second model is a second information set; or,
in a case where a computing resource of the terminal device is insufficient, the processing unit 610 is configured to switch an algorithm for implementing a first function from a first algorithm to a second algorithm, an input of the first algorithm is a first information set, and an input of the second algorithm is a second information set;
where complexity of the second model is lower than complexity of the first model, complexity of the second algorithm is lower than complexity of the first algorithm, and an amount of information included in the second information set is greater than an amount of information included in the first information set, and the first function includes at least one of: downlink channel estimation, downlink beam management, downlink positioning, channel state information (CSI) feedback, and mobility management.

In some embodiments, the terminal device 600 further includes a communication unit 620;
the communication unit 620 is configured to receive first information and second information respectively. The first information is determined based on an available computing resource of the terminal device within a first duration, and the first information is used to configure first downlink reference signal resource information, the second information is determined based on an available computing resource of the terminal device within a second duration, and the second information is used to configure second downlink reference signal resource information. The available computing resource within the first duration is more than the available computing resource within the second duration;
the processing unit 610 is further configured to acquire the first information set according to the first downlink reference signal resource information, and the terminal device acquires the second information set according to the second downlink reference signal resource information.

In some embodiments, the first information is further used to configure the first model, and/or the second information is further used to configure the second model; or,
the first information is further used to configure the first algorithm, and/or the second information is further used to configure the second algorithm.

In some embodiments, the processing unit 610 is further configured to determine the first model according to the available computing resource of the terminal device within the first duration, and/or, the processing unit 610 is further configured to determine the second model according to the available computing resource of the terminal device within the second duration; or,
the processing unit 610 is further configured to determine the first algorithm according to the available computing resource of the terminal device within the first duration, and/or the processing unit 610 is further configured to determine the second algorithm according to the available computing resource of the terminal device within the second duration.

In some embodiments, the available computing resource of the terminal device is determined by at least one of: computing power of the terminal device, and a computing power level of the terminal device.

In some embodiments, a correspondence between the available computing resource of the terminal device and the computing power of the terminal device is determined by at least one of: protocol agreement, pre-definition, pre-configuration of an operator, configuration of the network device, configuration of the terminal device; and/or,
a correspondence between the available computing resource of the terminal device and the computing power level of the terminal device is determined by at least one of: protocol agreement, pre-definition, pre-configuration of an operator, configuration of the network device, configuration of the terminal device.

In some embodiments, the computing power of the terminal device includes fixed computing power and real-time computing power.

In some embodiments, the communication unit 620 is configured to send third information and fourth information respectively;
where the third information includes at least one of: the available computing resource of the terminal device within the first duration, computing power of the terminal device within the first duration, and a computing power level of the terminal device within the first duration;
where the fourth information includes at least one of: the available computing resource of the terminal device within the second duration, computing power of the terminal device within the second duration, and a computing power level of the terminal device within the second duration.

In some embodiments, the third information is uplink control information (UCI), or the third information is a radio resource control (RRC) message. The third information is carried by at least one of: an uplink data channel, an uplink control channel, an uplink artificial intelligence data transmission channel, an uplink multicast channel, and an uplink broadcast channel. And/or, the fourth information is UCI, or
the fourth information is an RRC message, the fourth information is carried by at least one of: an uplink data channel, an uplink control channel, an uplink artificial intelligence data transmission channel, an uplink multicast channel, and an uplink broadcast channel.

In some embodiments, the above communication unit may be a communication interface or a transceiver, or an input/output interface of a communication chip or a system on chip. The above processing unit may be one or more processors.

It should be understood that the terminal device 600 according to the embodiments of the present disclosure may correspond to the terminal device in the method embodiments of the present disclosure, and the above and other operations and/or functions of respective units in the terminal device 600 are respectively used to implement the corresponding processes of the terminal device in the method 200 shown in FIG. 3, which will not be repeated herein for the sake of brevity.

FIG. 13 shows a schematic block diagram of a network device 700 according to the embodiments of the present disclosure. As shown in FIG. 13, the network device 700 includes:
a communication unit 710, configured to send first indication information to a terminal device, the first indication information is used to indicate the terminal device to switch a network model for implementing a first function from a first model to a second model in a case where a computing resource is insufficient, an input of the first model is a first information set, and an input of the second model is a second information set; or, the first indication information is used to indicate the terminal device to switch an algorithm for implementing a first function from a first algorithm to a second algorithm in a case where a computing resource is insufficient, an input of the first algorithm is a first information set, and an input of the second algorithm is a second information set;
where complexity of the second model is lower than complexity of the first model, complexity of the second algorithm is lower than complexity of the first algorithm, and an amount of information included in the second information set is greater than an amount of information included in the first information set, the first function includes at least one of: downlink channel estimation, downlink beam management, downlink positioning, channel state information (CSI) feedback, and mobility management.

In some embodiments, the network device 700 further includes a processing unit 720;
the processing unit 720 is configured to determine first information according to an available computing resource of the terminal device within a first duration, and the network device determines second information according to an available computing resource of the terminal device within a second duration, the available computing resource within the first duration is more than the available computing resource within the second duration, the first information is used to configure first downlink reference signal resource information, and the first downlink reference signal resource information is used for the terminal device to acquire the first information set, the second information is used to configure second downlink reference signal resource information, and the second downlink reference signal resource information is used for the terminal device to acquire the second information set.
the communication unit 710 is further configured to send the first information and the second information to the terminal device respectively.

In some embodiments, the first information is further used to configure the first model, and/or the second information is further used to configure the second model; or,
the first information is further used to configure the first algorithm, and/or the second information is further used to configure the second algorithm.

In some embodiments, the first model is determined based on the available computing resource of the terminal device within the first duration, and/or the second model is determined based on the available computing resource of the terminal device within the second duration; or
the first algorithm is determined based on the available computing resource of the terminal device within the first duration, and/or the second algorithm is determined based on the available computing resource of the terminal device within the second duration.

In some embodiments, the available computing resource of the terminal device is determined by at least one of: computing power of the terminal device, and a computing power level of the terminal device.

In some embodiments, a correspondence between the available computing resource of the terminal device and the computing power of the terminal device is determined by at least one of: protocol agreement, pre-definition, pre-configuration of an operator, configuration of the network device, and configuration of the terminal device; and/or,
a correspondence between the available computing resource of the terminal device and the computing power level of the terminal device is determined by at least one of: protocol agreement, pre-definition, pre-configuration of an operator, configuration of the network device, and configuration of the terminal device.

In some embodiments, the computing power of the terminal device includes fixed computing power and real-time computing power.

In some embodiments, the communication unit 710 is further configured to receive third information and fourth information sent respectively by the terminal device;
where the third information includes at least one of: the available computing resource of the terminal device within the first duration, computing power of the terminal device within the first duration, and a computing power level of the terminal device within the first duration;
where the fourth information includes at least one of: the available computing resource of the terminal device within the second duration, computing power of the terminal device within the second duration, and a computing power level of the terminal device within the second duration.

In some embodiments, the third information is uplink control information (UCI), or the third information is a radio resource control (RRC) message, the third information is carried by at least one of: an uplink data channel, an uplink control channel, an uplink artificial intelligence data transmission channel, an uplink multicast channel, and an uplink broadcast channel; and/or,
the fourth information is UCI, or the fourth information is an RRC message, the fourth information is carried by at least one of: an uplink data channel, an uplink control channel, an uplink artificial intelligence data transmission channel, an uplink multicast channel, and an uplink broadcast channel.

In some embodiments, the above communication unit may be a communication interface or a transceiver, or an input/output interface of a communication chip or a system on chip. The above processing unit may be one or more processors.

It should be understood that the network device 700 according to the embodiments of the present disclosure may correspond to the network device in the method embodiments of the present disclosure, and the above and other operations and/or functions of respective units in the network device 700 are respectively for implementing the corresponding processes of the network device in the method 300 shown in FIG. 6, which will not be repeated herein for the sake of brevity.

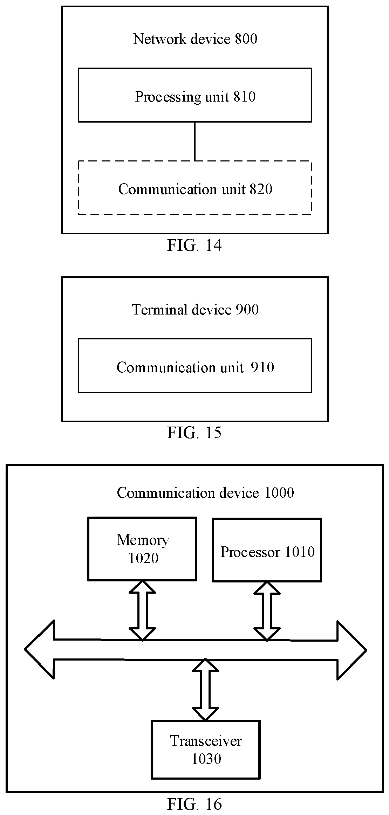

FIG. 14 shows a schematic block diagram of a network device 800 according to the embodiments of the present disclosure. As shown in FIG. 14, the network device 800 includes a processing unit 810;
in a case where a computing resource of the network device is insufficient, the processing unit 810 is configured to switch a network model for implementing a second function from a third model to a fourth model, an input of the third model is a third information set, and an input of the fourth model is a fourth information set; or,
in a case where a computing resource of the network device is insufficient, the processing unit 810 is configured to switch an algorithm for implementing a second function from a third algorithm to a fourth algorithm, an input of the third algorithm is a third information set, and an input of the fourth algorithm is a fourth information set;
where complexity of the fourth model is lower than complexity of the third model, complexity of the fourth algorithm is lower than complexity of the third algorithm, and an amount of information included in the fourth information set is greater than an amount of information included in the third information set, and the second function includes at least one of: uplink channel estimation, uplink beam management, uplink positioning, channel state information (CSI) feedback, and mobility management.

In some embodiments, the network device 800 further includes a communication unit 820;
where the communication unit 820 is configured to send fifth information and sixth information to a terminal device respectively;
where the fifth information is determined based on an available computing resource of the network device within a third duration, and the fifth information is used to configure first uplink reference signal resource information, the sixth information is determined based on an available computing resource of the network device within a fourth duration, and the sixth information is used to configure second uplink reference signal resource information;
where the available computing resource within the third duration is more than the available computing resource within the fourth duration, the third information set is determined based on an uplink reference signal sent by the terminal device through the first uplink reference signal resource information, and the fourth information set is determined based on an uplink reference signal sent by the terminal device through the second uplink reference signal resource information.

In some embodiments, the network device 800 further includes a communication module 820;
the communication unit 820 is configured to send seventh information and eighth information to a terminal device respectively;
where the seventh information is determined based on an available computing resource of the network device within a third duration, and the eighth information is determined based on an available computing resource of the network device within a fourth duration, the seventh information is used to configure the third model, and the eighth information is used to configure the fourth model; or the seventh information is used to configure the third algorithm, and the eighth information is used to configure the fourth algorithm, the available computing resource within the third duration is more than the available computing resource within the fourth duration;
where the third model and the fourth model are CSI feedback models. The third information set is determined based on CSI information fed back by the terminal device by means of the third model, and the fourth information set is determined based on CSI information fed back by the terminal device by means of the fourth model, or, the third algorithm and the fourth algorithm are CSI feedback algorithms, the third information set is determined based on CSI information fed back by the terminal device by means of the third algorithm, and the fourth information set is determined based on CSI information fed back by the terminal device by means of the fourth algorithm.

In some embodiments, the network device 800 further includes a communication module 820;
the communication unit 820 is configured to send ninth information and tenth information to a terminal device respectively;
where the ninth information is determined based on an available computing resource of the network device within a third duration, and the ninth information is used to configure first positioning reference signal resource information, the tenth information is determined based on an available computing resource of the network device within a fourth duration, and the tenth information is used to configure second positioning reference signal resource information;
where the available computing resource within the third duration is more than the available computing resource within the fourth duration, the third information set is determined based on positioning information acquired by the terminal device by means of the first positioning reference signal resource information, the fourth information set is determined based on positioning information acquired by the terminal device by means of the second positioning reference signal resource information.

In some embodiments, the processing unit 810 is further configured to determine the third model according to the available computing resource of the network device within the third duration, and/or, the processing unit 810 is further configured to determine the fourth model according to the available computing resource of the network device within the fourth duration; or,
the processing unit 810 is further configured to determine the third algorithm according to the available computing resource of the network device within the third duration, and/or the processing unit 810 is further configured to determine the fourth algorithm according to the available computing resource of the network device within the fourth duration.

In some embodiments, the available computing resource of the network device is determined by at least one of: computing power of the network device, and a computing power level of the network device.

In some embodiments, a correspondence between the available computing resource of the network device and the computing power of the network device is determined by at least one of: protocol agreement, pre-definition, pre-configuration of an operator, configuration of the network device, configuration of the terminal device. And/or, a correspondence between the available computing resource of the network device and the computing power level of the network device is determined by at least one of: protocol agreement, pre-definition, pre-configuration of an operator, configuration of the network device, configuration of the terminal device.

In some embodiments, the computing power of the network device includes fixed computing power and real-time computing power.

In some embodiments, the above communication unit may be a communication interface or a transceiver, or an input/output interface of a communication chip or a system on chip. The above processing unit may be one or more processors.

It should be understood that the network device 800 according to the embodiments of the present disclosure may correspond to the network device in the method embodiments of the present disclosure, and the above and other operations and/or functions of respective units in the network device 800 are respectively for implementing the corresponding processes of the network device in the method 400 shown in FIG. 7, which will not be repeated herein for the sake of brevity.

FIG. 15 shows a schematic block diagram of a terminal device 900 according to the embodiments of the present disclosure. As shown in FIG. 15, the terminal device includes:
a communication unit 910, configured to receive second indication information sent by a network device;
where the second indication information is used to indicate that the network device switches a network model for implementing a second function from a third model to a fourth model in a case where a computing resource is insufficient, an input of the third model is a third information set, and an input of the fourth model is a fourth information set; or, the second indication information is used to indicate that the network device switches an algorithm for implementing a second function from a third algorithm to a fourth algorithm in a case where a computing resource is insufficient, an input of the third algorithm is a third information set, and an input of the fourth algorithm is a fourth information set;
where complexity of the fourth model is lower than complexity of the third model, complexity of the fourth algorithm is lower than complexity of the third algorithm, and an amount of information included in the fourth information set is greater than an amount of information included in the third information set, and the second function includes at least one of: uplink channel estimation, uplink beam management, uplink positioning, channel state information (CSI) feedback, and mobility management.

In some embodiments, the communication unit 910 is further configured to receive fifth information and sixth information sent by the network device, respectively;
where the fifth information is determined based on an available computing resource of the network device within a third duration, and the fifth information is used to configure first uplink reference signal resource information, the sixth information is determined based on an available computing resource of the network device within a fourth duration, and the sixth information is used to configure second uplink reference signal resource information;
where the available computing resource within the third duration is more than the available computing resource within the fourth duration, the third information set is determined based on an uplink reference signal sent by the terminal device through the first uplink reference signal resource information, and the fourth information set is determined based on an uplink reference signal sent by the terminal device through the second uplink reference signal resource information.

In some embodiments, the communication unit 910 is further configured to receive seventh information and eighth information sent by the network device, respectively;
where the seventh information is determined based on an available computing resource of the network device within a third duration, and the eighth information is determined based on an available computing resource of the network device within a fourth duration, the seventh information is used to configure the third model, and the eighth information is used to configure the fourth model; or the seventh information is used to configure the third algorithm, and the eighth information is used to configure the fourth algorithm, the available computing resource within the third duration is more than the available computing resource within the fourth duration;
where the third model and the fourth model are CSI feedback models, the third information set is determined based on CSI information fed back by the terminal device by means of the third model, and the fourth information set is determined based on CSI information fed back by the terminal device by means of the fourth model; or, the third algorithm and the fourth algorithm are CSI feedback algorithms, the third information set is determined based on CSI information fed back by the terminal device by means of the third algorithm, and the fourth information set is determined based on CSI information fed back by the terminal device by means of the fourth algorithm.

In some embodiments, the communication unit 910 is further configured to receive ninth information and tenth information sent by the network device, respectively;
the ninth information is determined based on an available computing resource of the network device within a third duration, and the ninth information is used to configure first positioning reference signal resource information, the tenth information is determined based on an available computing resource of the network device within a fourth duration, and the tenth information is used to configure second positioning reference signal resource information;
where the available computing resource within the third duration is more than the available computing resource within the fourth duration, the third information set is determined based on positioning information acquired by the terminal device by means of the first positioning reference signal resource information, and the fourth information set is determined based on positioning information acquired by the terminal device by means of the second positioning reference signal resource information.

In some embodiments, the third model is determined based on the available computing resource of the network device within the third duration, and/or the fourth model is determined based on the available computing resource of the network device within the fourth duration; or,
the third algorithm is determined based on the available computing resource of the network device within the third duration, and/or the fourth algorithm is determined based on the available computing resource of the network device within the fourth duration.

In some embodiments, the available computing resource of the network device is determined by at least one of: computing power of the network device, and a computing power level of the network device.

In some embodiments, a correspondence between the available computing resource of the network device and the computing power of the network device is determined by at least one of: protocol agreement, pre-definition, pre-configuration of an operator, configuration of the network device, and configuration of the terminal device; and/or,
a correspondence between the available computing resource of the network device and the computing power level of the network device is determined by at least one of: protocol agreement, pre-definition, pre-configuration of an operator, configuration of the network device, and configuration of the terminal device.

In some embodiments, the computing power of the network device includes fixed computing power and real-time computing power.

In some embodiments, the above communication unit may be a communication interface or a transceiver, or an input/output interface of a communication chip or a system on chip. The above processing unit may be one or more processors.

It should be understood that the terminal device 900 according to the embodiments of the present disclosure may correspond to the terminal device in the method embodiments of the present disclosure, and the above and other operations and/or functions of respective units in the terminal device 900 are respectively for implementing the corresponding processes of the terminal device in the method 500 shown in FIG. 11, which will not be repeated herein for the sake of brevity.

FIG. 16 is a schematic structural diagram of a communication device 1000 provided in the embodiments of the present disclosure. The communication device 1000 shown in FIG. 16 includes a processor 1010. The processor 1010 may call and run a computer program from a memory to implement the methods in the embodiments of the present disclosure.

Optionally, as shown in FIG. 16, the communication device 1000 may further include a memory 1020. The processor 1010 can call and run a computer program from the memory 1020 to implement the methods in the embodiments of the present disclosure.

The memory 1020 may be a separate device independent of the processor 1010, or may be integrated into the processor 1010.

In some embodiments, as shown in FIG. 16, the communication device 1000 may further include a transceiver 1030. The processor 1010 can control the transceiver 1030 to communicate with other devices, specifically, to transmit information or data to other devices or to receive information or data transmitted by other devices.

The transceiver 1030 may include a transmitter and a receiver. The transceiver 1030 may further include an antenna, where one or more antennas can be provided.

In some embodiments, the communication device 1000 may specifically be a network device of an embodiment of the present disclosure, and the communication device 1000 may implement corresponding processes implemented by the network device in each method of the embodiment of the present disclosure, which will not be described in detail here for the sake of brevity.

In some embodiments, the communication device 1000 may specifically be the terminal device of the embodiments of the present disclosure, and the communication device 1000 may implement the corresponding processes implemented by the terminal device and in the various methods of the embodiments of the present disclosure, which will not be repeated herein for the sake of brevity.

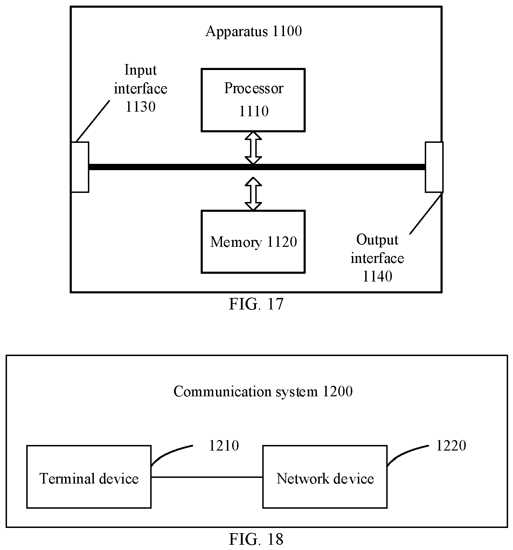

FIG. 17 is a schematic structural diagram of an apparatus of the embodiments of the present disclosure. The apparatus 1100 shown in FIG. 17 includes a processor 1110, which may call and run a computer program from a memory to implement the methods in the embodiments of the present disclosure.

In some embodiments, as shown in FIG. 17, the apparatus 1100 may further include a memory 1120. The processor 1110 may call and run the computer program from the memory 1120 to implement the methods in the embodiments of the present disclosure.

The memory 1120 may be a separate device independent of the processor 1110, or may be integrated into the processor 1110.

In some embodiments, the apparatus 1100 may further include an input interface 1130. The processor 1110 can control the input interface 1130 to communicate with other devices or chips, specifically, to acquire information or data transmitted by other devices or chips.

In some embodiments, the apparatus 1100 may further include an output interface 1140. The processor 1110 can control the output interface 1140 to communicate with other devices or chips, specifically, to output information or data to other devices or chips.

In some embodiments, the apparatus can be applied to the network device in the embodiments of the present disclosure, and the apparatus can implement the corresponding processes implemented by the network device in the various methods of the embodiments of the present disclosure. For the sake of brevity, the details will not be repeated herein.

In some embodiments, the apparatus may be applied to the terminal device in the embodiments of the present disclosure, and the apparatus may implement the corresponding processes implemented by the terminal device and in the various methods of the embodiments of the present disclosure, which will not be repeated herein for the sake of brevity.

In some embodiments, the apparatus mentioned in the embodiments of the present disclosure may also be called a chip, For example, the apparatus may be a system-level chip, a system chip, a chip system or a system-on-chip chip.

FIG. 18 is a schematic block diagram of a communication system 1200 provided in embodiments of the present disclosure. As shown in FIG. 18, the communication system 1200 includes a terminal device 1210 and a network device 1220.

Herein, the terminal device 1210 may be used to implement the corresponding functions implemented by the terminal device in the above method, and the network device 1220 may be used to implement the corresponding functions implemented by the network device in the above method, which will not be repeated herein for the sake of brevity.

It should be understood that, the processor in the embodiments of the present disclosure may be an integrated circuit chip and have a processing capability of signals. In the process of implementation, each step of the above-mentioned method embodiments can be implemented by an integrated logic circuit of hardware in a processor or an instruction in software form. The above-mentioned processor may be a general-purpose processor, a digital signal processor (Digital Signal Processor, DSP), an application specific integrated circuit (Application Specific Integrated Circuit, ASIC), a field programmable gate array (Field Programmable Gate Array, FPGA) or other programmable logic devices, a discrete gate or a transistor logic device, a discrete hardware component. The disclosed methods, steps, and logical block diagrams in the embodiments of the present disclosure can be implemented or executed. The general-purpose processor may be a microprocessor or any conventional processor. The steps of the method disclosed in combination with the embodiments of the present disclosure may be directly embodied as being performed and completed by a hardware decoding processor, or by using a combination of hardware and software modules in the decoding processor. The software module may be located in the mature storage medium in the art such as a random memory, a flash memory, a read-only memory, a programmable read-only memory or an electrically erasable programmable memory, a register, etc. The storage medium is located in the memory, and the processor reads information in the memory and completes the steps in the above-mentioned methods in combination with its hardware.

It can be understood that the memory in the embodiments of the present disclosure may be a volatile memory or a non-volatile memory, or may include both volatile and non-volatile memories. Herein, the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), which is used as an external cache. By way of illustration, but not limitation, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct rambus random access memory (Direct Rambus RAM, DR RAM). It should be noted that the memories of the systems and methods described herein are intended to include, but are not limited to, these and any other suitable types of memories.

It should be understood that the above-mentioned memory is an exemplary but not restrictive description. For example, the memory in the embodiments of this disclosure can also be static random access memory (static RAM, SRAM), dynamic random access memory (dynamic RAM, DRAM), synchronous dynamic random access memory (synchronous DRAM, SDRAM), double data rate synchronous dynamic random access memory (double data rate SDRAM, DDR SDRAM), enhanced synchronous dynamic random access memory (enhanced SDRAM, ESDRAM), synch link dynamic random access memory (synch link DRAM, SLDRAM), direct rambus random access memory (Direct Rambus RAM, DR RAM) etc. In other words, the memory in the embodiments of this disclosure is intended to include, but is not limited to, these and any other suitable types of memories.

Embodiments of the present disclosure provide a readable and writable storage medium for computer storage.

In some embodiments, the computer readable storage medium may be applied to the network device in the embodiments of the present disclosure, and the computer program causes a computer to perform the corresponding processes implemented by the network device and in the various methods of the embodiments of the present disclosure, which will not be repeated herein for the sake of brevity.

In some embodiments, the computer readable storage medium may be applied to the terminal device in the embodiments of the present disclosure, and the computer program causes a computer to perform the corresponding processes implemented by the terminal device and in various methods of the embodiments of the present disclosure, which will not be repeated herein for the sake of brevity.

The embodiments of the present disclosure further provide a computer program product including computer program instructions.

In some embodiments, the computer program product may be applied to the network device in the embodiments of the present disclosure, and the computer program instructions cause a computer to perform the corresponding processes implemented by the network device and in the various methods of the embodiments of the present disclosure, which will not be repeated herein for the sake of brevity.

In some embodiments, the computer program product may be applied to the terminal device in the embodiments of the present disclosure, and the computer program instructions cause a computer to perform the corresponding processes implemented by the terminal device and in various methods of the embodiments of the present disclosure, which will not be repeated herein for the sake of brevity.

The embodiments of the present disclosure further provide a computer program.

In some embodiments, the computer program may be applied to the network device in the embodiments of the present disclosure, the computer program when being executed on a computer, causes the computer to perform the corresponding processes implemented by the network device and in various methods of the embodiments of the present disclosure, which will not be repeated herein for the sake of brevity.

In some embodiments, the computer program may be applied to the terminal device in the embodiments of the present disclosure, the computer program when being executed on a computer, causes the computer to perform the corresponding processes implemented by the terminal device and in various methods of the embodiments of the present disclosure, which will not be repeated herein for the sake of brevity.

Those skilled in the art may realize that the units and algorithm steps of each example described in the disclosed embodiments can be implemented through electronic hardware, or a combination of computer software and electronic hardware. Whether these functions are performed by way of hardware or software depends on a specific application and a design constraint of the technical solution. A skilled person may use different methods for each specific application, to implement the described functions, but such implementation should not be considered beyond the scope of the present disclosure.

Those skilled in the art may clearly understand that, for convenience and simplicity of description, the specific working processes of the system, the apparatus and the unit described above may refer to the corresponding processes in the above method embodiments, which may not be described repeatedly herein.

In several embodiments provided by the present disclosure, it should be understood that the disclosed system, apparatus and method may be implemented in other ways. For example, the apparatus embodiments described above are only illustrative. For example, the division of units is only a logical function division, and there may be other division methods for actual implementation. For example, multiple units or components can be combined or integrated into another system, or some features may be ignored or may not be executed. On the other hand, the coupling or direct coupling or communicative connection between each other as shown or discussed above may be an indirect coupling or a communicative connection via some interfaces, apparatuses or units, which may be electrical, mechanical, or in other forms.

The units described as separate components may be or may not be physically separated, and the components shown as units may be or may not be physical units, that is, they may be located in one place or distributed across multiple network units. A portion or all of the units may be selected according to actual needs to implement the purpose of the embodiments.

In addition, the functional units in the embodiments of the present disclosure may be integrated into a single processing unit or the functional units may exist physically and separately, or two or more units may be integrated into one unit.

If the described functions are implemented in a form of a software functional unit and sold or used as an independent product, they may be stored in a computer readable storage medium. Based on this understanding, the technical solution of the present disclosure, or the portion that contributes to the existing technology or the portion of the technical solution, can be reflected in the form of a software product. The computer software product is stored in a storage medium, including several instructions to enable a computer device (which may be a personal computer, server, or network device, etc.) to perform all or a portion of the steps of the methods described in the various embodiments of the present disclosure. And the above described storage medium includes: a USB flash disk, a mobile hard disk, a read-only memory (Read-Only Memory, ROM), a random access memory (Random Access Memory, RAM), a disk or a CD, and other medium that can store program code.

The foregoing descriptions are merely specific implementation manners of the present disclosure, but the protection scope of the present disclosure is not limited thereto; any person skilled in the art could readily conceive of changes or replacements within the technical scope of the present disclosure, which shall all be included in the protection scope of the present disclosure. Therefore, the protection scope of the present disclosure shall be subject to the protection scope of the claims.

## Claims

1. A wireless communication method, comprising:
switching, by a terminal device, a network model for implementing a first function from a first model to a second model in a case where a computing resource of the terminal device is insufficient, wherein an input of the first model is a first information set, and an input of the second model is a second information set; or,
switching, by a terminal device, an algorithm for implementing a first function from a first algorithm to a second algorithm in a case where a computing resource of the terminal device is insufficient, wherein an input of the first algorithm is a first information set, and an input of the second algorithm is a second information set;
wherein complexity of the second model is lower than complexity of the first model, complexity of the second algorithm is lower than complexity of the first algorithm, an amount of information comprised in the second information set is greater than an amount of information comprised in the first information set, and the first function comprises at least one of: downlink channel estimation, downlink beam management, downlink positioning, channel state information (CSI) feedback, and mobility management.

2. The method according to claim 1, wherein the method further comprises:
receiving, by the terminal device, first information and second information respectively, wherein the first information is determined based on an available computing resource of the terminal device within a first duration, and the first information is used to configure first downlink reference signal resource information; and the second information is determined based on an available computing resource of the terminal device within a second duration, and the second information is used to configure second downlink reference signal resource information; and the available computing resource within the first duration is more than the available computing resource within the second duration; and
acquiring, by the terminal device, the first information set according to the first downlink reference signal resource information, and acquiring, by the terminal device, the second information set according to the second downlink reference signal resource information.

3. The method according to claim 2, wherein
the first information is further used to configure the first model, and/or, the second information is further used to configure the second model; or,
the first information is further used to configure the first algorithm, and/or, the second information is further used to configure the second algorithm.

4. The method according to claim 2, wherein the method further comprises:
determining, by the terminal device, the first model according to the available computing resource of the terminal device within the first duration, and/or, determining, by the terminal device, the second model according to the available computing resource of the terminal device within the second duration; or
determining, by the terminal device, the first algorithm according to the available computing resource of the terminal device within the first duration, and/or, determining, by the terminal device, the second algorithm according to the available computing resource of the terminal device within the second duration.

5. The method according to any one of claims 2 to 4, wherein
the available computing resource of the terminal device is determined by at least one of: computing power of the terminal device, and a computing power level of the terminal device.

6. The method according to claim 5, wherein
a correspondence between the available computing resource of the terminal device and the computing power of the terminal device is determined by at least one of: protocol agreement, pre-definition, pre-configuration of an operator, configuration of a network device, configuration of the terminal device; and/or,
a correspondence between the available computing resource of the terminal device and the computing power level of the terminal device is determined by at least one of: protocol agreement, pre-definition, pre-configuration of an operator, configuration of a network device, configuration of the terminal device.

7. The method according to claim 5 or 6, wherein the computing power of the terminal device comprises fixed computing power and real-time computing power.

8. The method according to any one of claims 2 to 7, wherein the method further comprises:
sending, by the terminal device, third information and fourth information respectively;
wherein the third information comprises at least one of: the available computing resource of the terminal device within the first duration, computing power of the terminal device within the first duration, and a computing power level of the terminal device within the first duration; and
the fourth information comprises at least one of: the available computing resource of the terminal device within the second duration, computing power of the terminal device within the second duration, and a computing power level of the terminal device within the second duration.

9. The method according to claim 8, wherein
the third information is uplink control information (UCI), or the third information is a radio resource control (RRC) message, wherein the third information is carried by at least one of: an uplink data channel, an uplink control channel, an uplink artificial intelligence data transmission channel, an uplink multicast channel, and an uplink broadcast channel; and/or,
the fourth information is UCI, or the fourth information is an RRC message, wherein the fourth information is carried by at least one of: an uplink data channel, an uplink control channel, an uplink artificial intelligence data transmission channel, an uplink multicast channel, and an uplink broadcast channel.

10. A wireless communication method, comprising:
sending, by a network device, first indication information to a terminal device;
wherein the first indication information is used to indicate the terminal device to switch a network model for implementing a first function from a first model to a second model in a case where a computing resource is insufficient, an input of the first model is a first information set, and an input of the second model is a second information set; or, the first indication information is used to indicate the terminal device to switch an algorithm for implementing a first function from a first algorithm to a second algorithm in a case where an computing resource is insufficient, an input of the first algorithm is a first information set, and an input of the second algorithm is a second information set; and
wherein complexity of the second model is lower than complexity of the first model, complexity of the second algorithm is lower than complexity of the first algorithm, an amount of information comprised in the second information set is greater than an amount of information comprised in the first information set, and the first function comprises at least one of: downlink channel estimation, downlink beam management, downlink positioning, channel state information (CSI) feedback, and mobility management.

11. The method according to claim 10, wherein the method further comprises:
determining, by the network device, first information according to an available computing resource of the terminal device within a first duration, and determining, by the network device, second information according to an available computing resource of the terminal device within a second duration; wherein the available computing resource within the first duration is more than the available computing resource within the second duration; the first information is used to configure first downlink reference signal resource information, and the first downlink reference signal resource information is used for the terminal device to acquire the first information set; the second information is used to configure second downlink reference signal resource information, and the second downlink reference signal resource information is used for the terminal device to acquire the second information set; and
sending, by the network device, the first information and the second information to the terminal device, respectively.

12. The method according to claim 11, wherein
the first information is further used to configure the first model, and/or, the second information is further used to configure the second model; or,
the first information is further used to configure the first algorithm, and/or, the second information is further used to configure the second algorithm.

13. The method according to claim 11, wherein
the first model is determined based on the available computing resource of the terminal device within the first duration, and/or, the second model is determined based on the available computing resource of the terminal device within the second duration; or
the first algorithm is determined based on the available computing resource of the terminal device within the first duration, and/or, the second algorithm is determined based on the available computing resource of the terminal device within the second duration.

14. The method according to any one of claims 11 to 13, wherein
the available computing resource of the terminal device is determined by at least one of: computing power of the terminal device, and a computing power level of the terminal device.

15. The method according to claim 14, wherein
a correspondence between the available computing resource of the terminal device and the computing power of the terminal device is determined by at least one of: protocol agreement, pre-definition, pre-configuration of an operator, configuration of the network device, configuration of the terminal device; and/or,
a correspondence between the available computing resource of the terminal device and the computing power level of the terminal device is determined by at least one of: protocol agreement, pre-definition, pre-configuration of an operator, configuration of the network device, configuration of the terminal device.

16. The method according to claim 14 or 15, wherein the computing power of the terminal device comprises fixed computing power and real-time computing power.

17. The method according to any one of claims 11 to 16, wherein the method further comprises:
receiving, by a network device, third information and fourth information sent, respectively, by the terminal device;
wherein the third information comprises at least one of: the available computing resource of the terminal device within the first duration, computing power of the terminal device within the first duration, and a computing power level of the terminal device within the first duration; and
the fourth information comprises at least one of: the available computing resource of the terminal device within the second duration, computing power of the terminal device within the second duration, and a computing power level of the terminal device within the second duration.

18. The method according to claim 17, wherein
the third information is uplink control information (UCI), or the third information is a radio resource control (RRC) message, and the third information is carried by at least one of: an uplink data channel, an uplink control channel, an uplink artificial intelligence data transmission channel, an uplink multicast channel, an uplink broadcast channel; and/or,
the fourth information is UCI, or the fourth information is an RRC message, and the fourth information is carried by at least one of: an uplink data channel, an uplink control channel, an uplink artificial intelligence data transmission channel, an uplink multicast channel, and an uplink broadcast channel.

19. A wireless communication method, comprising:
switching, by a network device, a network model for implementing a second function from a third model to a fourth model in a case where a computing resource of the network device is insufficient, wherein an input of the third model is a third information set, and an input of the fourth model is a fourth information set; or,
switching, by a network device, an algorithm for implementing a second function from a third algorithm to a fourth algorithm in a case where a computing resource of the network device is insufficient, wherein an input of the third algorithm is a third information set, and an input of the fourth algorithm is a fourth information set;
wherein complexity of the fourth model is lower than complexity of the third model, complexity of the fourth algorithm is lower than complexity of the third algorithm, an amount of information comprised in the fourth information set is greater than an amount of information comprised in the third information set, and the second function comprises at least one of: uplink channel estimation, uplink beam management, uplink positioning, channel state information (CSI) feedback, and mobility management.

20. The method according to claim 19, wherein the method further comprises:
sending, by the network device, fifth information and sixth information to a terminal device, respectively;
wherein the fifth information is determined based on an available computing resource of the network device within a third duration, and the fifth information is used to configure first uplink reference signal resource information; and the sixth information is determined based on an available computing resource of the network device within a fourth duration, and the sixth information is used to configure second uplink reference signal resource information; and
wherein the available computing resource within the third duration is more than the available computing resource within the fourth duration; the third information set is determined based on an uplink reference signal sent by the terminal device by means of the first uplink reference signal resource information, and the fourth information set is determined based on an uplink reference signal sent by the terminal device by means of the second uplink reference signal resource information.

21. The method according to claim 19, wherein the method further comprises:
sending, by the network device, seventh information and eighth information to a terminal device, respectively;
wherein the seventh information is determined based on an available computing resource of the network device within a third duration, and the eighth information is determined based on the available computing resource of the network device within a fourth duration; the seventh information is used to configure the third model, and the eighth information is used to configure the fourth model; or the seventh information is used to configure the third algorithm, and the eighth information is used to configure the fourth algorithm; and the available computing resource within the third duration is more than the available computing resource within the fourth duration;
wherein the third model and the fourth model are CSI feedback models, the third information set is determined based on CSI information fed back by the terminal device by means of the third model, and the fourth information set is determined based on CSI information fed back by the terminal device by means of the fourth model; or, the third algorithm and the fourth algorithm are CSI feedback algorithms, the third information set is determined based on CSI information fed back by the terminal device by means of the third algorithm, and the fourth information set is determined based on CSI information fed back by the terminal device by means of the fourth algorithm.

22. The method according to claim 19, wherein the method further comprises:
sending, by the network device, ninth information and tenth information to a terminal device, respectively;
wherein the ninth information is determined based on an available computing resource of the network device within a third duration, and the ninth information is used to configure first positioning reference signal resource information; and the tenth information is determined based on an available computing resource of the network device within a fourth duration, and the tenth information is used to configure second positioning reference signal resource information; and
wherein the available computing resource within the third duration is more than the available computing resource within the fourth duration; the third information set is determined based on positioning information acquired by the terminal device by means of the first positioning reference signal resource information, and the fourth information set is determined based on positioning information acquired by the terminal device by means of the second positioning reference signal resource information.

23. The method according to any one of claims 20 to 22, wherein the method further comprises:
determining, by the network device, the third model according to the available computing resource of the network device within the third duration, and/or, determining, by the network device, the fourth model according to the available computing resource of the network device within the fourth duration; or
determining, by the network device, the third algorithm according to the available computing resource of the network device within the third duration, and/or determining, by the network device, the fourth algorithm according to the available computing resource of the network device within the fourth duration.

24. The method according to any one of claims 20 to 23, wherein
the available computing resource of the network device is determined by at least one of: computing power of the network device, and a computing power level of the network device.

25. The method according to claim 24, wherein
a correspondence between the available computing resource of the network device and the computing power of the network device is determined by at least one of: protocol agreement, pre-definition, pre-configuration of an operator, configuration of the network device, configuration of the terminal device; and/or,
a correspondence between the available computing resource of the network device and the computing power level of the network device is determined by at least one of: protocol agreement, pre-definition, pre-configuration of an operator, configuration of the network device, configuration of the terminal device.

26. The method according to claim 24 or 25, wherein the computing power of the network device comprises fixed computing power and real-time computing power.

27. A wireless communication method, comprising:
receiving, by a terminal device, second indication information sent by a network device;
wherein the second indication information is used to indicate that the network device switches a network model for implementing a second function from a third model to a fourth model in a case where a computing resource is insufficient, an input of the third model is a third information set, and an input of the fourth model is a fourth information set; or, the second indication information is used to indicate that the network device switches an algorithm for implementing a second function from a third algorithm to a fourth algorithm in a case where a computing resource is insufficient, an input of the third algorithm is a third information set, and an input of the fourth algorithm is a fourth information set;
wherein complexity of the fourth model is lower than complexity of the third model, complexity of the fourth algorithm is lower than complexity of the third algorithm, an amount of information comprised in the fourth information set is greater than an amount of information comprised in the third information set, and the second function comprises at least one of: uplink channel estimation, uplink beam management, uplink positioning, channel state information (CSI) feedback, and mobility management.

28. The method according to claim 27, wherein the method further comprises:
receiving, by the terminal device, fifth information and sixth information sent by the network device respectively;
wherein the fifth information is determined based on an available computing resource of the network device within a third duration, and the fifth information is used to configure first uplink reference signal resource information; and the sixth information is determined based on an available computing resource of the network device within a fourth duration, and the sixth information is used to configure second uplink reference signal resource information; and
wherein the available computing resource within the third duration is more than the available computing resource within the fourth duration; the third information set is determined based on an uplink reference signal sent by the terminal device by means of the first uplink reference signal resource information, and the fourth information set is determined based on an uplink reference signal sent by the terminal device by means of the second uplink reference signal resource information.

29. The method according to claim 27, wherein the method further comprises:
receiving, by the terminal device, seventh information and eighth information sent by the network device, respectively;
wherein the seventh information is determined based on an available computing resource of the network device within a third duration, and the eighth information is determined based on an available computing resource of the network device within a fourth duration; the seventh information is used to configure the third model, and the eighth information is used to configure the fourth model; or the seventh information is used to configure the third algorithm, and the eighth information is used to configure the fourth algorithm; and the available computing resource within the third duration is more than the available computing resource within the fourth duration; and
wherein the third model and the fourth model are CSI feedback models, the third information set is determined based on CSI information fed back by the terminal device by means of the third model, and the fourth information set is determined based on CSI information fed back by the terminal device by means of the fourth model; or, the third algorithm and the fourth algorithm are CSI feedback algorithms, the third information set is determined based on CSI information fed back by the terminal device by means of the third algorithm, and the fourth information set is determined based on CSI information fed back by the terminal device by means of the fourth algorithm.

30. The method according to claim 27, wherein the method further comprises:
receiving, by the terminal device, ninth information and tenth information sent by the network device, respectively;
wherein the ninth information is determined based on an available computing resource of the network device within a third duration, and the ninth information is used to configure first positioning reference signal resource information; and the tenth information is determined based on an available computing resource of the network device within a fourth duration, and the tenth information is used to configure second positioning reference signal resource information; and
wherein the available computing resource within the third duration is more than the available computing resource within the fourth duration; the third information set is determined based on positioning information acquired by the terminal device by means of the first positioning reference signal resource information, and the fourth information set is determined based on positioning information acquired by the terminal device by means of the second positioning reference signal resource information.

31. The method according to any one of claims 28 to 30, wherein
the third model is determined based on the available computing resource of the network device within the third duration, and/or, the fourth model is determined based on the available computing resource of the network device within the fourth duration; or
the third algorithm is determined based on the available computing resource of the network device within the third duration, and/or, the fourth algorithm is determined based on the available computing resource of the network device within the fourth duration.

32. The method according to any one of claims 28 to 31, wherein
the available computing resource of the network device is determined by at least one of: computing power of the network device, and a computing power level of the network device.

33. The method according to claim 32, wherein
a correspondence between the available computing resource of the network device and the computing power of the network device is determined by at least one of: protocol agreement, pre-definition, pre-configuration of an operator, configuration of the network device, configuration of the terminal device; and/or,
a correspondence between the configuration computing resource of the network device and the computing power level of the network device is determined by at least one of: protocol agreement, pre-definition, pre-configuration of an operator, configuration of the network device, configuration of the terminal device.

34. The method according to claim 32 or 33, wherein the computing power of the network device comprises fixed computing power and real-time computing power.

35. A terminal device, comprising: a processing unit, wherein
in a case where a computing resource of a terminal device is insufficient, the processing unit is configured to switch a network model for implementing a first function from a first model to a second model, an input of the first model is a first information set, and an input of the second model is a second information set; or,
in a case where a computing resource of a terminal device is insufficient, the processing unit is configured to switch an algorithm for implementing a first function from a first algorithm to a second algorithm, an input of the first algorithm is a first information set, and an input of the second algorithm is a second information set;
wherein complexity of the second model is lower than complexity of the first model, complexity of the second algorithm is lower than complexity of the first algorithm, an amount of information comprised in the second information set is greater than an amount of information comprised in the first information set, and the first function comprises at least one of: downlink channel estimation, downlink beam management, downlink positioning, channel state information (CSI) feedback, and mobility management.

36. A network device, comprising:
a communication unit, configured to send first indication information to a terminal device;
wherein the first indication information is used to indicate the terminal device to switch a network model for implementing a first function from a first model to a second model in a case where a computing resource is insufficient, an input of the first model is a first information set, and an input of the second model is a second information set; or, the first indication information is used to indicate the terminal device to switch an algorithm for implementing a first function from a first algorithm to a second algorithm in a case where an computing resource is insufficient, an input of the first algorithm is a first information set, and an input of the second algorithm is a second information set;
wherein complexity of the second model is lower than complexity of the first model, complexity of the second algorithm is lower than complexity of the first algorithm, an amount of information comprises in the second information set is greater than an amount of information comprised in the first information set, and the first function comprises at least one of: downlink channel estimation, downlink beam management, downlink positioning, channel state information (CSI) feedback, and mobility management.

37. A network device, comprising: a processing unit, wherein
in a case where a computing resource of the network device is insufficient, the processing unit is configured to switch a network model for implementing a second function from a third model to a fourth model, an input of the third model is a third information set, and an input of the fourth model is a fourth information set; or,
in a case where a computing resource of the network device is insufficient, the processing unit is configured to switch an algorithm for implementing a second function from a third algorithm to a fourth algorithm, an input of the third algorithm is a third information set, and an input of the fourth algorithm is a fourth information set;
wherein complexity of the fourth model is lower than complexity of the third model, complexity of the fourth algorithm is lower than complexity of the third algorithm, an amount of information comprised in the fourth information set is greater than an amount of information comprised in the third information set, and the second function comprises at least one of: uplink channel estimation, uplink beam management, uplink positioning, channel state information (CSI) feedback, and mobility management.

38. A terminal device, comprising:
a communication unit, configured to receive second indication information sent by a network device;
wherein the second indication information is used to indicate that the network device switches a network model for implementing a second function from a third model to a fourth model in a case where a computing resource is insufficient, an input of the third model is a third information set, and an input of the fourth model is a fourth information set; or, the second indication information is used to indicate that the network device switches an algorithm for implementing a second function from a third algorithm to a fourth algorithm in a case where an computing resource is insufficient, an input of the third algorithm is a third information set, and an input of the fourth algorithm is a fourth information set;
wherein complexity of the fourth model is lower than complexity of the third model, complexity of the fourth algorithm is lower than complexity of the third algorithm, an amount of information comprised in the fourth information set is greater than an amount of information comprised in the third information set, and the second function comprises at least one of: uplink channel estimation, uplink beam management, uplink positioning, channel state information (CSI) feedback, and mobility management.

39. A terminal device, comprising: a processor and a memory, wherein the memory is configured to store a computer program, the processor is configured to call the computer program stored in the memory and run the computer program, so as to enable the terminal device to perform the method according to any one of claims 1 to 9, or enable the terminal device to perform the method according to any one of claims 27 to 34.

40. A network device, comprising: a processor and a memory, wherein the memory is configured to store a computer program, the processor is configured to call the computer program stored in the memory and run the computer program, so as to enable the network device to perform the method according to any one of claims 10 to 18, or enable the network device to perform the method according to any one of claims 19 to 26.

41. A chip, comprising: a processor, configured to call a computer program from a memory and run the computer program, so as to enable a device equipped with the chip to perform the method according to any one of claims 1 to 9, or perform the method according to any one of claims 11 to 18, or perform the method according to any one of claims 19 to 26, or perform the method according to any one of claims 27 to 34.

42. A computer readable storage medium with a computer program stored thereon, wherein the computer program enables a computer to perform the method according to any one of claims 1 to 9, or perform the method according to any one of claims 11 to 18, or perform the method according to any one of claims 19 to 26, or perform the method according to any one of claims 27 to 34.

43. A computer program product, comprising computer program instructions, wherein the computer program instructions enable a computer to perform the method according to any one of claims 1 to 9, or perform the method according to any one of claims 11 to 18, or perform the method according to any one of claims 19 to 26, or perform the method according to any one of claims 27 to 34.

44. A computer program, wherein the computer program enables a computer to perform the method according to any one of claims 1 to 9, or perform the method according to any one of claims 11 to 18, or perform the method according to any one of claims 19 to 26, or perform the method according to any one of claims 27 to 34.
